# EUROPEAN PATENT APPLICATION

(11) **EP 4 195 824 A1**
(43) Date of publication of application: **14.06.2023**
(21) Application number: 21852834.7
(22) Date of filing: 06.08.2021
(51) Int. Cl.: H04W 72/04, H04L 5/00

(54) **SIGNAL TRANSMISSION METHOD, TERMINAL, AND NETWORK DEVICE**

(30) Priority: 07.08.2020 CN 202010791658
(71) Applicant: Datang Mobile Communications Equipment Co., Ltd., Beijing 100085 (CN)
(72) Inventor: HUANG, Qiuping, Beijing 100085 (CN)
(74) Representative: Studio Torta S.p.A.
(86) International application number: PCT/CN2021/111212
(87) International publication number: WO 2022/028578

(57) **Abstract**

A signal transmission method, a terminal, and a network device are disclosed. The method includes: receiving, by the terminal, first information sent by the network device, where the first information is used to indicate that a first sounding reference signal (SRS) resource is used for multiple usages; and sending, by the terminal, an SRS corresponding to the first SRS resource to the network device according to the first information.

## Description

### CROSS-REFERENCE TO RELATED APPLICATION

This application claims the priority of Chinese Application No. 202010791658.4, filed on August 7, 2020, the disclosure of which is incorporated in its entirety by reference herein.

### TECHNICAL FIELD

The present disclosure relates to the field of communication technologies, and in particular to a signal transmission method, a terminal, and a network device.

### BACKGROUND

Sounding reference signal (SRS), is an uplink reference signal, which can be used for channel quality estimation (used to measure channel state information CSI)) and beam management. User equipment (UE) sends an SRS to a network device. After the network device receives the SRS sent by the UE, based on measurement of the SRS, the network device performs scheduling of physical uplink shared channel (PUSCH), downlink scheduling, and uplink beam management. A base station can configure SRS resources for the UE and configure corresponding usage for each SRS resource. An SRS corresponding to an SRS resource has a corresponding usage of the SRS resource. The UE sends the SRS corresponding to the SRS resource to the base station, to realize the corresponding usage.

However, SRS resources of different usage types have different configuration restrictions. The UE usually has different transmission behaviors for SRSs of different usage types, and the network device needs to configure, for the UE, different SRS resources for different usages, and perform SRS transmission corresponding to the SRS resources. Therefore, a large SRS transmission overhead is required.

### SUMMARY

Embodiments of the present disclosure provide a signal transmission method, a terminal and a network device, which can solve the problem of large SRS transmission overhead.

One embodiment of the present disclosure provides a signal transmission method, performed by a terminal, including:
receiving first information sent by a network device, wherein the first information is used to indicate that a first sounding reference signal (SRS) resource is used for multiple usages; and
sending an SRS corresponding to the first SRS resource to the network device according to the first information.

Optionally, the first information is further used to indicate a first SRS resource set where the first SRS resource is included and/or indicate the first SRS resource.

Optionally, the first SRS resource includes all or part of SRS resources in an SRS resource set configured with a first usage type; the first information is further used to indicate that all or part of the SRS resources in the SRS resource set configured with the first usage type are further used for a second usage.

Optionally, the first SRS resource includes a specific SRS resource in the SRS resource set configured with the first usage type, and the first information is used to indicate that the specific SRS resource in the SRS resource set configured with the first usage type is further used for the second usage.

Optionally, the first SRS resource includes all or part of SRS resources in the SRS resource set which is configured with the first usage type and a time-domain type of a specific type; the first information is used to indicate that all or part of the SRS resources in the SRS resource set which is configured with the first usage type and the time-domain type of the specific type, are further used for the second usage.

Optionally, the first SRS resource includes a specific SRS resource in the SRS resource set which is configured with the first usage type and the time-domain type of the specific type; and the first information is used to indicate that the specific SRS resource in the SRS resource set which is configured with the first usage type and the time-domain type of the specific type, is further used for the second usage.

Optionally, the specific SRS resource includes at least one of the following:
an SRS resource indicated by the first information;
first s SRS resources with smallest indexes in the SRS resource set configured with the first usage type, wherein s is a positive integer;
first m SRS resources with earliest transmission moment in the SRS resource set configured with the first usage type, wherein m is a positive integer;
an SRS resource in a specific SRS resource set in the SRS resource set configured with the first usage type;
an SRS resource, which is configured in the SRS resource set configured with the first usage type and which is simultaneously configured in a second SRS resource set; wherein the second SRS resource set is an SRS resource set whose usage type is configured as a second usage type,
first k SRS resources with smallest indexes in the SRS resource set configured with the first usage type and the time-domain type of the specific type, wherein k is a positive integer;
first n SRS resources with earliest transmission moment in the SRS resource set configured with the first usage type and the time-domain type of the specific type, wherein n is a positive integer;
an SRS resource in a specific SRS resource set in the SRS resource set configured with the first usage type and the time-domain type of the specific type; or,
an SRS resource, which is configured in the SRS resource set configured with the first usage type and the time-domain type of the specific type and which is simultaneously configured in the second SRS resource set.

Optionally, the specific SRS resource set is one of the following:
an SRS resource set indicated by the first information;
first k SRS resource sets with smallest indexes in the SRS resource set configured with the first usage type, wherein k is a positive integer;
first n SRS resource sets with earliest transmission moment in the SRS resource set configured with the first usage type, wherein n is a positive integer;
first t SRS resource sets with smallest indexes in the SRS resource set configured with the first usage type and the time-domain type of the specific type, wherein t is a positive integer;
first r SRS resource sets with earliest transmission moment in the SRS resource set configured with the first usage type and the time-domain type of the specific type, wherein r is a positive integer.

Optionally, the first usage includes at least one of the following:
downlink channel state information (CSI) acquisition;
uplink CSI acquisition;
CSI acquisition on codebook-based physical shared channel (PUSCH);
CSI acquisition on non-codebook PUSCH;
beam management; or,
position;
   and/or,
the second usage includes at least one of the following:
downlink CSI acquisition;
uplink CSI acquisition;
CSI acquisition on codebook-based PUSCH;
CSI acquisition on non-codebook PUSCH;
beam management; or,
position.

Optionally, the sending an SRS corresponding to the first SRS resource to the network device according to the first information, includes:
determining the first SRS resource according to the first information;
in case that the second usage is downlink CSI acquisition, determining uplink filter of the SRS corresponding to the first SRS resource according to downlink filter of a specific signal; and
sending the SRS corresponding to the first SRS resource to the network device, based on the uplink filter of the SRS corresponding to the first SRS resource.

Optionally, the first SRS resource includes: an SRS resource which is simultaneously included in both the SRS resource set configured with the first usage type and the SRS resource set configured with the second usage type.

Optionally, the first SRS resource includes an SRS resource which is simultaneously included in both the SRS resource set configured with the first usage type and the time-domain type of the specific type, and the second SRS resource set configured with the second usage type.

Optionally, the first information is carried in an SRS resource set configuration signaling sent by the network device to the terminal;
in case that the SRS resource set configuration signaling does not configure an SRS resource set whose usage type is the second usage type, the terminal determines that the SRS resource set configured with the first usage type is further used for the second usage; or,
in case that the SRS resource set configuration signaling configures an SRS resource set whose usage type is the second usage type, and there presents an SRS resource which is simultaneously included in both the SRS resource set configured with the first usage type and the SRS resource set configured with the second usage type, the terminal determines that the SRS resource set configured with the first usage type is further used for the second usage, or the terminal determines that the SRS resource which is simultaneously included in both the SRS resource set configured with the first usage type and the SRS resource set configured with the second usage type, is further used for the second usage.

Optionally, the sending an SRS corresponding to the first SRS resource to the network device according to the first information, includes:
determining the first SRS resource according to the first information;
in case that the first SRS resource or the SRS resource set where the first SRS resource is included, is not configured with spatial relation information, sending the SRS corresponding to the first SRS resource set to the network device by using an uplink filter corresponding to spatial relation information indicated for SRS resources in an SRS resource set configured with one of the multiple usage types; or,
in case that the first SRS resource or the SRS resource set where the first SRS resource is included, is not configured with a transmission configuration indicator (TCI) state, sending the SRS corresponding to the first SRS resource set to the network device by using an uplink filter corresponding to a TCI state indicated for an SRS resource or an SRS resource set configured with one of the multiple usage types.

Optionally, the sending an SRS corresponding to the first SRS resource to the network device according to the first information, includes:
determining the first SRS resource according to the first information;
determining an uplink filter for SRS transmission corresponding to the first SRS resource, according to one or more of multiple downlink filter for reception of physical downlink shared channel (PDSCH), and sending the SRS corresponding to the first SRS resource according to the uplink filter.

Optionally, after the sending an SRS corresponding to the first SRS resource to the network device according to the first information, the method further includes:
determining, according to the uplink filter for SRS transmission corresponding to the first SRS resource, downlink filter for reception of PDSCH sent by the network device.

Optionally, when transmitting the SRS corresponding to the SRS resource set where the first SRS resource is included, to the network device, SRSs corresponding to any two SRS resources in the SRS resource set where the first SRS resource is included, are transmitted at different moments; and no uplink transmission is performed between any two SRS resources which are configured in a same slot and which are in the SRS resource set where the first SRS resource is included.

One embodiment of the present disclosure further provides a signal transmission method, performed by a network device, including:
sending first information to a terminal, wherein the first information is used to indicate that a first sounding reference signal (SRS) resource is used for multiple usages;
receiving an SRS corresponding to the first SRS resource, which is sent by the terminal to the network device according to the first information.

Optionally, the first information is further used to indicate the first SRS resource set where the first SRS resource is included and/or indicate the first SRS resource.

Optionally, the first SRS resource includes all or part of SRS resources in an SRS resource set configured with a first usage type; the first information is further used to indicate that all or part of the SRS resources in the SRS resource set configured with the first usage type are further used for a second usage.

Optionally, the first SRS resource includes a specific SRS resource in the SRS resource set configured with the first usage type, and the first information is used to indicate that the specific SRS resource in the SRS resource set configured with the first usage type is further used for the second usage.

Optionally, the first SRS resource includes all or part of SRS resources in the SRS resource set configured with the first usage type and the time-domain type of the specific type; and the first information is used to indicate that all or part of the SRS resources in the SRS resource set configured with the first usage type and the time-domain type of the specific type, are further used for the second usage.

Optionally, the first SRS resource includes a specific SRS resource in the SRS resource set configured with the first usage type and the time-domain type of the specific type, and the first information is used to indicate that the specific SRS resource in the SRS resource set configured with the first usage type and the time-domain type of the specific type, is further used for the second usage.

Optionally, the specific SRS resource includes at least one of the following:
an SRS resource indicated by the first information;
first s SRS resources with smallest indexes in the SRS resource set configured with the first usage type, wherein s is a positive integer;
first m SRS resources with earliest transmission moment in the SRS resource set configured with the first usage type, wherein m is a positive integer;
an SRS resource in a specific SRS resource set in the SRS resource set configured with the first usage type;
an SRS resource, which is configured in the SRS resource set configured with the first usage type and which is simultaneously configured in a second SRS resource set; wherein the second SRS resource set is an SRS resource set whose usage type is configured as a second usage type,
first k SRS resources with smallest indexes in the SRS resource set configured with the first usage type and the time-domain type of the specific type, wherein k is a positive integer;
first n SRS resources with earliest transmission moment in the SRS resource set configured with the first usage type and the time-domain type of the specific type, wherein n is a positive integer;
an SRS resource in a specific SRS resource set in the SRS resource set configured with the first usage type and the time-domain type of the specific type; or,
an SRS resource, which is configured in the SRS resource set configured with the first usage type and the time-domain type of the specific type and which is simultaneously configured in the second SRS resource set.

Optionally, the specific SRS resource set is one of the following:
an SRS resource set indicated by the first information;
first k SRS resource sets with smallest indexes in the SRS resource set configured with the first usage type, wherein k is a positive integer;
first n SRS resource sets with earliest transmission moment in the SRS resource set configured with the first usage type, wherein n is a positive integer;
first t SRS resource sets with smallest indexes in the SRS resource set configured with the first usage type and the time-domain type of the specific type, wherein t is a positive integer;
first r SRS resource sets with earliest transmission moment in the SRS resource set configured with the first usage type and the time-domain type of the specific type, wherein r is a positive integer.

Optionally, the first usage includes at least one of the following:
downlink channel state information (CSI) acquisition;
uplink CSI acquisition;
CSI acquisition on codebook-based physical shared channel (PUSCH);
CSI acquisition on non-codebook PUSCH;
beam management; or,
position;
   and/or,
the second usage includes at least one of the following:
downlink CSI acquisition;
uplink CSI acquisition;
CSI acquisition on codebook-based PUSCH;
CSI acquisition on non-codebook PUSCH;
beam management; or,
position.

Optionally, the first SRS resource includes: an SRS resource which is simultaneously included in both the SRS resource set configured with the first usage type and the SRS resource set configured with the second usage type.

Optionally, the first SRS resource includes: an SRS resource which is simultaneously included in both the first SRS resource set configured with the first usage type and the time-domain type of the specific type, and the second SRS resource set configured with the second usage type.

Optionally, the first information is carried in a first signaling or the first information is carried in an SRS resource set configuration signaling sent by the network device to the terminal;
the first signaling includes at least one of the following:
radio resource control (RRC) signaling;
medium access control-control element (MAC-CE) signaling;
downlink control information (DCI) signaling; or,
SRS trigger signaling.

Optionally, the first information is carried in an SRS resource set configuration signaling sent by the network device to the terminal;
in case that the SRS resource set configuration signaling does not configure an SRS resource set whose usage type is the second usage type, it indicates that the SRS resource set configured with the first usage type is further used for the second usage; or,
in case that the SRS resource set configuration signaling configures an SRS resource set whose usage type is the second usage type, and there presents an SRS resource which is simultaneously included in both the SRS resource set configured with the first usage type and the SRS resource set configured with the second usage type, it indicates that the SRS resource set configured with the first usage type is further used for the second usage, or that the SRS resource which is simultaneously included in both the SRS resource set configured with the first usage type and the SRS resource set configured with the second usage type, is further used for the second usage.

Optionally, the receiving an SRS corresponding to the first SRS resource, which is sent by the terminal to the network device according to the first information, includes:
determining an uplink reception filter for SRS transmission corresponding to the first SRS resource, according to one or more of multiple downlink transmission filter for transmission of physical downlink shared channel (PDSCH), and receiving the SRS corresponding to the first SRS resource according to the uplink reception filter.

One embodiment of the present disclosure further provides a terminal, which includes a memory, a transceiver and a processor;
wherein the memory is configured to store a computer program; the transceiver is configured to send and receive data under control of the processor; the processor is configured to read the computer program in the memory and perform the following operations:
receiving first information sent by a network device, wherein the first information is used to indicate that a first sounding reference signal (SRS) resource is used for multiple usages; and
sending an SRS corresponding to the first SRS resource to the network device according to the first information.

Optionally, the first SRS resource includes all or part of SRS resources in an SRS resource set configured with a first usage type; the first information is further used to indicate that all or part of the SRS resources in the SRS resource set configured with the first usage type are further used for a second usage.

Optionally, the first SRS resource includes a specific SRS resource in the SRS resource set configured with the first usage type, and the first information is used to indicate that the specific SRS resource in the SRS resource set configured with the first usage type is further used for the second usage.

One embodiment of the present disclosure further provides a network device, which includes a memory, a transceiver and a processor;
wherein the memory is configured to store a computer program; the transceiver is configured to send and receive data under control of the processor; the processor is configured to read the computer program in the memory and perform the following operations:
sending first information to a terminal, wherein the first information is used to indicate that a first sounding reference signal (SRS) resource is used for multiple usages;
receiving an SRS corresponding to the first SRS resource, which is sent by the terminal to the network device according to the first information.

Optionally, the first SRS resource includes all or part of SRS resources in an SRS resource set configured with a first usage type; the first information is further used to indicate that all or part of the SRS resources in the SRS resource set configured with the first usage type are further used for a second usage.

Optionally, the first SRS resource includes a specific SRS resource in the SRS resource set configured with the first usage type, and the first information is used to indicate that the specific SRS resource in the SRS resource set configured with the first usage type is further used for the second usage.

One embodiment of the present disclosure further provides a terminal, including:
a first receiving module configured to receive first information sent by a network device, wherein the first information is used to indicate that a first SRS resource is used for multiple usages;
a first sending module configured to send an SRS corresponding to the first SRS resource to the network device according to the first information.

One embodiment of the present disclosure further provides a network device, which includes: a second sending unit configured to send first information to a terminal, wherein the first information is used to indicate that a first SRS resource is used for multiple usages, and to receive an SRS corresponding to the first SRS resource, which is sent to the network device according to the first information.

One embodiment of the present disclosure further provides a processor-readable storage medium, which includes a computer program stored thereon; wherein the computer program is configured to cause a processor to execute the signal transmission method provided in the embodiments of the present disclosure.

In the embodiment of the present disclosure, the first SRS resource is used for multiple usages, that is, multiple usages are configured for the first SRS resource. The first SRS resource can be multiplexed for multiple usages. Through the above steps, SRS transmission corresponding to the first SRS resource of multiple usages can be realized. In this way, even if multiple usages are required, it is only necessary to transmit the SRS corresponding to the first SRS resource of multiple usages, which enables the network device to control the terminal to send, based on multiple usages, the SRS over the first SRS resource, thereby multiplexing the SRS resource for multiple usages, and then reducing the SRS transmission overhead.

### BRIEF DESCRIPTION OF THE DRAWINGS

FIG. 1 is a schematic diagram of a network architecture applicable to an embodiment of the present disclosure;
FIG. 2 is a first flowchart of a signal transmission method according to an embodiment of the present disclosure;
FIG. 3 is a second flowchart of a signal transmission method according to an embodiment of the present disclosure;
FIG. 4 is a schematic diagram showing interaction between a base station and a terminal according to a signal transmission method according to an embodiment of the present disclosure;
FIG. 5 is a schematic diagram of a terminal according to an embodiment of the present disclosure;
FIG. 6 is a schematic diagram of a network device according to an embodiment of the present disclosure;
FIG. 7 is an another schematic diagram of a terminal according to an embodiment of the present disclosure; and
FIG. 8 is an another schematic diagram of a network device according to an embodiment of the present disclosure.

### DETAILED DESCRIPTION

In order to make technical problems to be solved, technical solutions and advantages of the present disclosure more apparent, the present disclosure will be described hereinafter in conjunction with the drawings and embodiments.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "j" generally means that relationship between associated objects before and after the character "/" is "or".

The term "plurality" in the embodiments of the present disclosure means two or more, and other quantifiers are similar.

The following clearly and completely describes the technical solutions in the embodiments of this disclosure with reference to the accompanying drawings in the embodiments of this disclosure. Apparently, the described embodiments are some but not all of the embodiments of this disclosure. All other embodiments obtained by a person of ordinary skill in the art based on the embodiments of this disclosure without creative efforts shall fall within the protection scope of this disclosure.

Embodiments of the present disclosure provide a signal transmission method, a terminal, and a network device, which can solve problems of a large SRS transmission overhead caused by poor mulplexing of an SRS resource. The signal transmission method, the terminal, and the network device provided in the embodiments of the present disclosure enable a network device to control the terminal to send, based on multiple usages, an SRS over a first SRS resource, thereby multiplexing the SRS resource for multiple usages, and then reducing the SRS transmission overhead.

The method and the device are based on the same concept. Since principles of the method and the device for solving the problems are similar, implementation of the device and the method can be referred to each other, and duplication is not repeated.

The technical solutions provided in the embodiments of the present disclosure may be applicable to various systems, including but not limited to the fifth generation communication (5G) system, the sixth generation communication (6G) system, the evolution version of long-term evolution (LTE) system, or other orthogonal frequency division multiplexing (OFDM) systems such as discrete fourier transform-spread-OFDM (DFT-S-OFDM) systems, especially 5G system. For example, the applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, 6G system, etc. each of the various systems includes a user equipment and a network device. The system may further include a core network part, such as an evolved packet system (EPS), a 5G system (5GS).

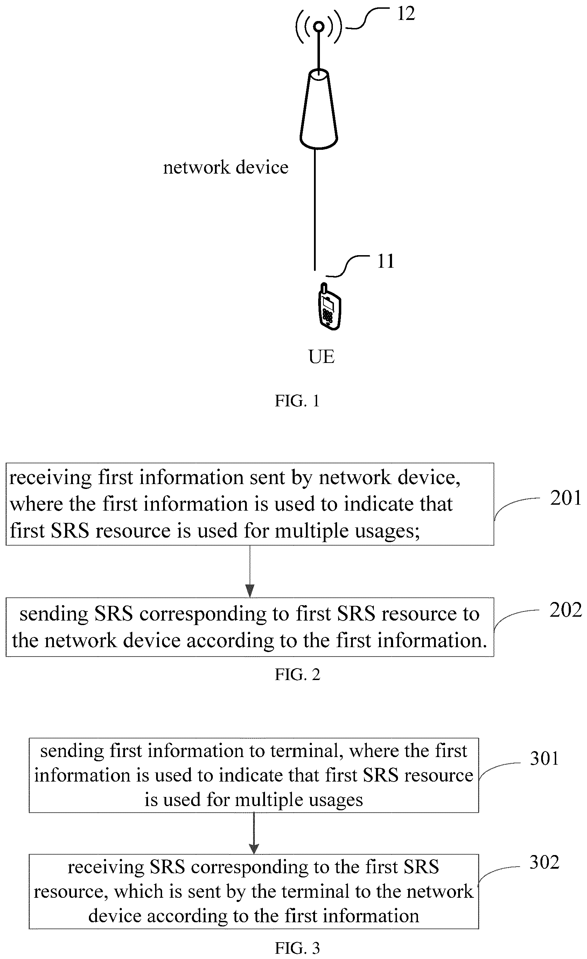

Referring to FIG. 1, FIG. 1 is a schematic diagram of a network architecture applicable to an embodiment of the present disclosure. As shown in FIG. 1, the network architecture includes a terminal 11 and a network device 12.

The terminal involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or car mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO).

According to forms and numbers of antenna combinations, MIMO transmission may be 2D-MIMO, 3D-MIMO, FD-MIMO, or massive-MIMO, or diversity transmission, precoding transmission, or beamforming transmission.

Referring to FIG. 2. FIG. 2 is a flowchart of a signal transmission method according to an embodiment of the present disclosure. As shown in FIG. 2, the signal transmission method is performed by a terminal, and includes the following steps:
Step 201: receiving first information sent by a network device, where the first information is used to indicate that a first SRS resource is used for multiple usages;
Step 202: sending an SRS corresponding to the first SRS resource to the network device according to the first information.

The SRS resource is a resource required for configuring the SRS. One SRS resource can correspond to one SRS. The network device can send the first information to the terminal to indicate that the first SRS resource is used for multiple usages. According to the first information, the terminal sends the SRS corresponding to the first SRS resource to the network device. Since the first resource corresponds to multiple usages, the sent SRS corresponds to multiple usages. For example, the usages may include CSI acquisition, uplink CSI acquisition, PUSCH CSI acquisition, non-codebook PUSCH CSI acquisition, beam management and positioning, etc. The foregoing multiple usages corresponding to the first resource may be multiple of the foregoing usages. The SRS corresponding to the first SRS resource is an SRS that uses the first SRS resource for transmission.

In this embodiment of the present disclosure, the first SRS resource is used for multiple usages, that is, multiple usages are configured for the first SRS resource. The first SRS resource can be multiplexed for multiple usages. Through the above steps, SRS transmission corresponding to the first SRS resource of multiple usages can be realized. In this way, even if multiple usages are required, it is only necessary to transmit the SRS corresponding to the first SRS resource of multiple usages, which enables the network device to control the terminal to send, based on multiple usages, the SRS over the first SRS resource, thereby multiplexing the SRS resource for multiple usages, and then reducing the SRS transmission overhead.

Optionally, the first information is further used to indicate information of a first SRS resource set where the first SRS resource is included, and second indication information indicates information of the first SRS resource.

The first information can be used to indicate the first SRS resource set where the first SRS resource is included, that is, to indicate which SRS resource set the first SRS resource is in. The first information may also be used to indicate the first SRS resource, that is, to indicate that the first SRS resource is which SRS resources. The first information may also be used to indicate the first SRS resource set where the first SRS resource is included and the first SRS resource. That is, the first information transmitted by the network device to the terminal may indicate the first SRS resource set where the first SRS resource is included and/or indicate the first SRS resource, which facilitates determination of the first SRS resource set and/or the first SRS resource. It should be noted that, in case that the first information indicates the first SRS resource set where the first SRS resource is included, the first SRS resource is at least part of SRS resources in the first SRS resource set; specifically, the first SRS resource being which SRS resources in the first SRS resource set, can be determined in many ways, for example, the first SRS resource may be determined from the first SRS resource set through a protocol specification, or the first SRS resource in the first SRS resource set may be indicated through signaling.

As an example, the first information may be carried through a signaling for indicating the SRS resource set; and the signaling for indicating the SRS resource set indicates the first SRS resource set where the first SRS resource is included, i.e., indicating which SRS resources the first SRS resource is in. There may be one or more first SRS resource sets, and there may be one or more first SRS resources. The second information may also be carried through a signaling for indicating the first SRS resource; and the signaling for indicating the first SRS resource is used to indicate which SRS resources the first SRS resources are, and there may be one or more first SRS resources. The second information may also be carried through a signaling for indicating the SRS resource set and the first SRS resource. At this point, the first information can indicate that the first SRS resource is which SRS resources in which SRS resource sets, where there may be one or more first SRS resource sets, and there may be one or more first SRS resources.

Optionally, the first SRS resource includes all or part of SRS resources in an SRS resource set configured with a first usage type; the first information is further used to indicate that all or part of the SRS resources in the SRS resource set configured with the first usage type are also used for a second usage. The first usage type is corresponding to a first usage. The first usage is different from the second usage. The second usage is corresponding to a second usage type.

That is, in this embodiment, the first SRS resource may include all SRS resources in the SRS resource set configured with the first usage type, and the first information may indicate that all SRS resources in the SRS resource set configured with the first usage type are also used for the second usage. Or, the first SRS resource may include part of the SRS resources in the SRS resource set configured with the first usage type, and the first information may indicate that part of the SRS resources in the SRS resource set configured with the first usage type are also used for the second usage. The SRS resource set configured with the first usage type can be understood as that the SRS resource set can be used for the first usage, and can further be used for the second usage through indication of the first information. In this way, all or part of SRS resources in the SRS resource set configured with the first usage can be used for the first usage and the second usage.

Optionally, the first SRS resource includes all or part of SRS resources in an SRS resource set configured with the first usage type and a time-domain type of a specific type. The first information includes fifth indication information. The fifth indication information is used to indicate that all or part of the SRS resources in the SRS resource set configured with the first usage type and the time-domain type of the specific type, are further used for the second usage.

That is, in this embodiment, in case that the first SRS resource includes all SRS resources in an SRS resource set configured with the first usage type and a time-domain type of a specific type, the first information can indicate that all SRS resources in the SRS resource set configured with the first usage type and the time-domain type of the specific type, are further used for the second usage. In case that the first SRS resource includes part of SRS resources in an SRS resource set configured with the first usage type and a time-domain type of a specific type, the first information can also indicate that part of the SRS resources in the SRS resource set configured with the first usage type and the time-domain type of the specific type, are further used for the second usage. In this way, all or part of SRS resources in the SRS resource set configured with the first usage can be used for the first usage and the second usage.

Optionally, the first information is carried by a first usage signaling. The first usage signaling is used to indicate usage of the first SRS resource set. The first SRS resource set is an SRS resource set including at least one SRS resource of the first SRS resource. The first usage signaling is used to indicate multiple usages.

That is, in this embodiment, the first information may also be carried through the first usage signaling. The first usage signaling can indicate usage of the first SRS resource set. The first usage signaling is used to indicate multiple usages. The first SRS resource set includes at least one SRS resource of the first SRS resource. It is to be understood that the first usage signaling may indicate multiple usages of the at least one SRS resource of the first SRS resource.

Optionally, the SRS resource set configured with the first usage type is an SRS resource set with usage signaling configured as the first usage type. For example, in the 3rd generation partnership project (3GPP) new radio (NR) system, the network device may configure one or more SRS resource sets for the terminal. Configuration information of each SRS resource set includes usage signaling, and the usage signaling may be configured as "codebook", "nonCodebook", "antennaSwitching" or "beamManagement". In case that the usage signaling is configured as "codebook", the SRS resource set can be used for channel state information (CSI) acquisition on codebook-based PUSCH. In case that the usage signaling is configured as "nonCodebook", the SRS resource set can be used for CSI acquisition on non-codebook PUSCH. In case that the usage signaling is configured as "antennaSwitching", the SRS resource set can be used for downlink CSI acquisition. In case that the usage signaling is configured as "beamManagement", the SRS resource set can be used for uplink beam management. SRS resource sets of different usages have different configuration restrictions.

Optionally, the time-domain type of the first SRS resource is aperiodic, semi-persistent or periodic.

In the 3GPP NR protocol, there are three time-domain types. In case that the time-domain type (resourceType) of one SRS resource is periodic, the terminal periodically sends an SRS based on configuration information of the one SRS resource. In case that the time-domain type of one SRS resource is aperiodic, the terminal sends an SRS based on trigger information of the one SRS resource (i.e., the SRS is sent only after receiving a trigger signaling). In case that the time-domain type of one SRS resource is semi-persistent, the terminal periodically sends an SRS based on an activation signaling of the one SRS resource, until a deactivation signaling is received. In this embodiment, the time-domain type of the foregoing first SRS resource used for multiple usages may be aperiodic, semi-persistent, or periodic.

Optionally, the first SRS resource includes a specific SRS resource in an SRS resource set configured with a first usage type, and the first information is used to indicate that the specific SRS resource in the SRS resource set configured with the first usage type is further used for a second usage.

That is, in case that the first SRS resource includes part of SRS resources in the SRS resource set configured with the first usage type, the first SRS resource may include a specific SRS resource in the SRS resource set configured with the first usage type, and the first information may indicate that the specific SRS resource in the SRS resource set configured with the first usage type is further used for the second usage. That is, the specific SRS resource in the SRS resource set configured with the first usage type can be used for the first usage and the second usage.

Optionally, the first SRS resource includes a specific SRS resource in an SRS resource set configured with the first usage type and a time-domain type of a specific type, and the first information is used to indicate that the specific SRS resource in the SRS resource set configured with the first usage type and the time-domain type of the specific type, is further used for the second usage.

That is, in this embodiment, the specific SRS resource in the SRS resource set configured with the first usage type and the time-domain type of the specific type, is further used for the second usage, so that the specific SRS resource is available for the first usage and the second usage.

Optionally, the specific SRS resource includes at least one of the following:
an SRS resource indicated by the first information;
first s SRS resources with smallest indexes in an SRS resource set configured with first usage type, where s is a positive integer;
first m SRS resources with earliest transmission moment in an SRS resource set configured with first usage type, where m is a positive integer;
an SRS resource in a specific SRS resource set in an SRS resource set configured with first usage type;
an SRS resource, which is configured in an SRS resource set configured with first usage type and which is simultaneously configured in a second SRS resource set; where the second SRS resource set is an SRS resource set whose usage type is configured as a second usage type, and the second usage type is corresponding to a second usage;
first k SRS resources with smallest indexes in an SRS resource set configured with a first usage type and a time-domain type of a specific type, where k is a positive integer;
first n SRS resources with earliest transmission moment in an SRS resource set configured with a first usage type and a time-domain type of a specific type, where n is a positive integer;
an SRS resource in a specific SRS resource set in an SRS resource set configured with a first usage type and a time-domain type of a specific type; or,
an SRS resource, which is configured in an SRS resource set configured with a first usage type and a time-domain type of a specific type and which is simultaneously configured in a second SRS resource set; where the second usage type is corresponding to a second usage.

In this embodiment, the specific resource may be indicated by the first information. It is to be noted that the specific SRS resource may also be indicated by a first signaling sent by the network device to the terminal, and the first information may be carried in the first signaling.

In addition, optionally, in case that the first information is used to indicate that a specific SRS resource in the SRS resource set configured with the first usage type is further used for the second usage, the specific SRS resource in the SRS resource set configured with the first usage type, includes at least one of the following: first s SRS resources with smallest indexes in the SRS resource set configured with the first usage type, first m SRS resources with earliest transmission moment in the SRS resource set configured with the first usage type, an SRS resource in a specific SRS resource set in the SRS resource set configured with the first usage type, or, an SRS resource which is configured in the SRS resource set configured with the first usage type and which is also configured in a second SRS resource set.

Optionally, in case that the first information is used to indicate that a specific SRS resource in the SRS resource set configured with the first usage type and a time-domain type of a specific type, is further used for the second usage, the specific SRS resource in the SRS resource set configured with the first usage type and the time-domain type of the specific type, includes at least one of the following: first k SRS resources with smallest indexes in the SRS resource set configured with the first usage type and the time-domain type of the specific type, first n SRS resources with earliest transmission moment in the SRS resource set configured with the first usage type and the time-domain type of the specific type, an SRS resource in a specific SRS resource set in the SRS resource set configured with the first usage type and the time-domain type of the specific type, or, an SRS resource which is configured in the SRS resource set configured with the first usage type and the time-domain type of the specific type and which is also configured in a second SRS resource set.

In this embodiment, the foregoing specific resource can be determined through the foregoing multiple ways, to improve flexibility of the specific resource.

Optionally, the specific SRS resource set is one of the following:
an SRS resource set indicated by the first information;
first k SRS resource sets with smallest indexes in an SRS resource set configured with first usage type, where k is a positive integer;
first n SRS resource sets with earliest transmission moment in an SRS resource set configured with first usage type, where n is a positive integer;
first t SRS resource sets with smallest indexes in an SRS resource set configured with a first usage type and a time-domain type of a specific type, where t is a positive integer;
first r SRS resource sets with earliest transmission moment in an SRS resource set configured with a first usage type and a time-domain type of a specific type, where r is a positive integer.

In this embodiment, the specific SRS resource set may be indicated by the first information. It is to be noted that the specific SRS resource set may also be indicated by a second signaling sent by the network device to the terminal, and the first information may be carried in the second signaling. In this embodiment, the foregoing specific resource set can be determined through the foregoing multiple ways, which improves flexibility of the specific resource set.

Optionally, before sending an SRS corresponding to the first SRS resource to the network device, the method further includes: receiving, from the network device, configuration information of a first SRS resource set and a second SRS resource set, where the first SRS resource is included; where the second SRS resource set is an SRS resource set whose usage type is configured as a second usage type, and the second usage type is corresponding to a second usage;
in case that a transmission moment of the first SRS resource set indicated by the configuration information overlaps in time with a transmission moment of the second SRS resource set, determining that the configuration information is wrong information.

That is, the network device can configure for the terminal, the first SRS resource set and the second SRS resource set of the second usage type; and the network device can send, to the terminal, the configuration information of the first SRS resource set and the second SRS resource set. In case that the transmission moment of the first SRS resource set and the transmission moment of the second SRS resource set are determined, according to the configuration information, to be overlapped in time, the terminal considers the configuration information as an incorrect configuration, which facilitates the terminal to detect the configuration and improves transmission stability.

Optionally, the first usage includes at least one of the following:
downlink channel state information (CSI) acquisition;
uplink CSI acquisition;
CSI acquisition on codebook-based physical shared channel (PUSCH);
CSI acquisition on non-codebook PUSCH;
beam management; or,
position.
   And/or

The second usage includes at least one of the following:
downlink CSI acquisition;
uplink CSI acquisition;
CSI acquisition on codebook-based PUSCH;
CSI acquisition on non-codebook PUSCH;
beam management; or,
position.

The first usage is different from the second usage. For example, in case that the first usage is uplink CSI acquisition, the second usage is at least one of downlink CSI acquisition, CSI acquisition on codebook-based PUSCH, CSI acquisition on non-codebook PUSCH, beam management or position. In this way, the first SRS resource can be used for at least two usages of downlink CSI acquisition, uplink CSI acquisition, CSI acquisition on codebook-based PUSCH, CSI acquisition on non-codebook PUSCH, beam management and positioning, thereby reducing SRS transmission overhead.

Optionally, the first usage is downlink CSI acquisition (for example, the usage of the corresponding SRS resource set is configured as "antennaSwitching"), and the second usage is uplink CSI acquisition.

Optionally, the first usage is beam management (for example, the usage of the corresponding SRS resource set is configured as "beamManagement"), and the second usage is uplink CSI acquisition.

Optionally, the first usage is uplink CSI acquisition, and the second usage is downlink CSI acquisition.

Optionally, the first usage is uplink CSI acquisition, and the second usage is beam management.

Optionally, the first usage is uplink CSI acquisition, and the second purpose is position.

Optionally, the first usage is beam management, and the second usage is position.

Optionally, the first usage is downlink CSI acquisition, and the second usage is position.

Optionally, the first usage is position, and the second usage is uplink CSI acquisition.

Optionally, the first usage is position, and the second usage is beam management.

Optionally, the first usage is position, and the second usage is downlink CSI acquisition.

As an optional embodiment, the first usage type is "antennaSwitching", and the second usage is "codebook".

Optionally, the first usage type is "antennaSwitching", and the second usage is "nonCodebook".

Optionally, the first usage type is "beamManagement", and the second usage is "codebook".

Optionally, the first usage type is "beamManagement", and the second usage is "nonCodebook".

Optionally, the first usage type is "codebook", and the second usage is "antennaSwitching".

Optionally, the first usage type is "codebook", and the second usage is "beamManagement".

Optionally, the first usage type is "nonCodebook", and the second usage is "antennaSwitching".

Optionally, the first usage type is "nonCodebook", and the second usage is "beamManagement".

Optionally, the usage type is corresponding to the usage, and the first usage type includes at least one of the following:
codebook type;
non-codebook type;
uplink CSI type;
antenna switching type; or
beam management type;
   and/or
the second usage type includes at least one of the following:
   codebook type;
   non-codebook type;
   uplink CSI type;
   antenna switching type; or
   beam management type.

As some examples, in case that a usage signaling of an SRS resource set is configured as "codebook", the usage type of the SRS resource set is considered to be a codebook type.

As some examples, in case that a usage signaling of an SRS resource set is configured as "nonCodebook", the usage type of the SRS resource set is considered to be a non-codebook type.

As some examples, in case that a usage signaling of an SRS resource set is configured as "beamManagement", the usage type of the SRS resource set is considered to be a beam management type.

As some examples, in case that a usage signaling of an SRS resource set is configured as "antennaSwitching", the usage type of the SRS resource set is considered to be a downlink CSI acquisition type.

It is to be noted that the codebook type is corresponding to the CSI acquisition on codebook-based PUSCH, the non-codebook type is corresponding to the CSI acquisition on non-codebook PUSCH, the uplink CSI type is corresponding to the uplink CSI acquisition, the antenna switching type is corresponding to the downlink CSI acquisition, and the beam management type is corresponding to beam management.

Optionally, the sending an SRS corresponding to the first SRS resource to the network device according to the first information, includes: determining the first SRS resource according to the first information; in case that a second usage is downlink CSI acquisition, determining uplink filter of the SRS corresponding to the first SRS resource according to downlink reception filter of a specific signal.

The first information can indicate that the first SRS resource is used for multiple usages. After receiving the first information, the first SRS resource corresponding to the first information can be determined. In case that the second usage is downlink CSI acquisition, the uplink filter can be determined according to the downlink filter of a specific signal, and the SRS corresponding to the first SRS resource is sent to the network device through the uplink filter, thereby improving transmission stability.

As an example, in case that the second usage is downlink CSI acquisition and the first usage type is codebook type, the uplink filter of the SRS corresponding to the first SRS resource is determined according to the downlink filter of the specific signal, that is, the SRS corresponding to the first SRS resource is transmitted through the uplink filter determined by the downlink filter of the specific signal. As an example, in case that the second usage is downlink CSI acquisition and the first usage type is a codebook type, or, in case that the second usage is downlink CSI acquisition and the first usage type is a non-codebook type, an SRS corresponding to the SRS resource which is simultaneously included in both the first SRS resource set and the second SRS resource set configured with the second usage type, is transmitted through the uplink filter determined by the downlink filter of the specific signal.

Optionally, the specific signal may be a signal indicated by the network device. For example, the specific signal is a spatial quasi-co-located (QCL) reference signal of an SRS resource configured with a second usage type, etc.

Optionally, the specific signal may also be a spatial relation information (SpatialRelationInfo) reference signal of an SRS resource configured with a second usage type.

As an example, the downlink filter of the specific signal is taken as the uplink filter for SRS transmission corresponding to the first SRS resource.

Optionally, the first SRS resource includes:
an SRS resource which is simultaneously included in both an SRS resource set configured with a first usage type and an SRS resource set configured with a second usage type. The second usage type is corresponding to a second usage.

That is, in this embodiment, the first SRS resource includes a resource which is simultaneously included in two SRS resource sets of different usages. In this way, the first SRS resource can be used for the first usage and the second usage, and SRS transmission corresponding to the first SRS resource used for the first usage and the second usage can realize the first usage and the second usage, thereby reducing SRS transmission overhead.

Optionally, the first SRS resource includes: an SRS resource which is simultaneously included in both a first SRS resource set configured with a first usage type and a time-domain type of a specific type, and a second SRS resource set.

That is, in this embodiment, the first SRS resource includes a resource which is simultaneously included in two SRS resource sets of different usages, and the time-domain type of the SRS resource set of the first usage type in the two usages is a specific type. In this way, the first SRS resource includes an SRS resource, which is used for two different usages and of which the time-domain type is a specific type, and SRS transmission corresponding to the first SRS resource used for the first usage and the second usage can realize the first usage and the second usage, thereby reducing SRS transmission overhead.

Optionally, the first information is carried in a first signaling or the first information is carried in an SRS resource set configuration signaling sent by the network device to the terminal.

The first signaling includes at least one of the following:
radio resource control (RRC) signaling;
medium access control-control element (MAC-CE) signaling;
downlink control information (DCI) signaling; or,
SRS trigger signaling.

That is, in this embodiment, the first signaling may be signaling used to indicate the first information; or, the first information is carried in the SRS resource set configuration signaling sent by the network device to the terminal, and sent to the terminal through the configuration signaling.

That is, the first information may be indicated by the dedicated first signaling. It is to be noted that the first signaling has different states, different states are corresponding to different indications, and at least one state of the first signaling is used to indicate that all or part of resources of an SRS resource set configured with the first usage type can be used for the second usage, i.e., such state of the first signaling indicates the first information. As an example, another state of the first signaling may be used to indicate that the SRS resource set configured with the first usage type is not used for the second usage. As an example, yet another state of the first signaling may be used to indicate that an SRS resource set of different usage types is not multiplexed for usages.

For example, the first signaling includes two states. One of the two states indicates that an SRS resource set whose usage type is downlink CSI acquisition (for example, an SRS resource set whose usage signaling is configured as "antennaSwitching") can be used for uplink CSI acquisition. The other of the two states indicates that only SRS resource set whose usage type is uplink CSI acquisition can be used for uplink CSI acquisition (for example, only SRS resource set whose usage signaling is configured as "codebook" are used for CSI acquisition on codebook-based PUSCH, and only SRS resource set whose usage signaling is configured as "nonCodebook" are used for CSI acquisition on non-codebook PUSCH). In case that the first signaling received by the terminal has a state 0, the terminal determines that an SRS resource set whose usage type is configured as "antennaSwitching" is used for uplink CSI acquisition; and then, when the terminal transmits the SRS resource set, the terminal needs to consider factors such as CSI acquisition of PUSCH and antenna virtualization. In case that the first signaling received by the terminal has a state 1, when the terminal transmits the SRS resource set, the terminal does not need to consider factors such as CSI acquisition of PUSCH and antenna virtualization, as shown in Table 1 below.

**Table 1**

| bit state of signaling | meaning |
|---|---|
| 0 | SRS resource set whose usage type is configured as "antennaSwitching" is used for uplink CSI acquisition on PUSCH whose transmission mode is "codebook" |
| 1 | only SRS resource set whose usage type is configured as "codebook" is used for uplink CSI acquisition on PUSCH whose transmission mode is "codebook" |

For another example, the first signaling includes multiple states which at least include: one state for indicating that an SRS resource set of usage type x can be used for usage y, and another state for indicating that an SRS resource set of usage type m can be used for usage n; where x and y are different, m and n are different, x and m are the same or different, y and n are the same or different. When x=m, y is not equal to n; when y=n, x is not equal to m, as shown in table 2.

**Table 2**

| bit state of signaling | meaning |
|---|---|
| 0 | SRS resource set whose usage type is configured as "antennaSwitching" is used for uplink CSI acquisition on PUSCH whose transmission mode is "codebook" |
| 1 | SRS resource set whose usage type is configured as "beamManagement" is used for uplink CSI acquisition on PUSCH whose transmission mode is "codebook" |
| 2 | only SRS resource set whose usage type is configured as "codebook" is used for uplink CSI acquisition on PUSCH whose transmission mode is "codebook" |

Optionally, in case that the first signaling is an SRS trigger signaling, the SRS trigger signaling may be indicated through an SRS request field in DCI.

Optionally, a trigger state of the SRS trigger signaling includes indication information of whether an SRS resource set of a first usage type is used for a second usage. That is, at least one state indicates that an SRS resource set of a first usage type is used for a second usage.

Optionally, the trigger state of the SRS trigger signaling includes indication information of whether an SRS resource set of a first usage type triggered by the SRS trigger signaling is used for a second usage.

Optionally, the trigger state of the SRS trigger signaling includes indication information of a second usage (for example, information indicating that the SRS resource set triggered by the SRS trigger signaling is used for the second usage).

Optionally, a bit state in the SRS request field includes indication information of whether an SRS resource set of a first usage type is used for a second usage.

Optionally, a bit state in the SRS request field includes indication information of whether an SRS resource set triggered by an SRS trigger signaling is used for a second usage.

Optionally, a bit state in the SRS request field includes indication information of a second usage (for example, information indicating that an SRS resource set triggered by an SRS trigger signaling is used for a second usage).

Optionally, the first information is carried in an SRS resource set configuration signaling sent by the network device to the terminal.

In case that the SRS resource set configuration signaling does not configure an SRS resource set whose usage type is a second usage type, the terminal determines that an SRS resource set configured with a first usage type is further used for the second usage; or,
in case that the SRS resource set configuration signaling configures an SRS resource set whose usage type is the second usage type, and there presents an SRS resource which is simultaneously included in both the SRS resource set configured with the first usage type and the SRS resource set configured with the second usage type, the terminal determines that the SRS resource set configured with the first usage type is further used for the second usage, or the terminal determines that the SRS resource which is simultaneously included in both the SRS resource set configured with the first usage type and the SRS resource set configured with the second usage type, is further used for the second usage.

That is, the terminal can determine whether the SRS resource set configuration signaling configures an SRS resource set whose usage type is the second usage type; if the SRS resource set configuration signaling does not configure an SRS resource set whose usage type is the second usage type, the terminal determines that the SRS resource set configured with the first usage type is further used for the second usage. It is to be understood that in case that SRS resource sets configured for the terminal do not include an SRS resource set configured with the second usage type, the SRS resource set configured with the first usage type is simultaneously used for the second usage. If the SRS resource set configuration signaling configures an SRS resource set whose usage type is the second usage type, the terminal can determine whether there presents an SRS resource which is simultaneously included in both the SRS resource set configured with the first usage type and the SRS resource set configured with the second usage type. In case that there presents an SRS resource which is simultaneously included in both the SRS resource set configured with the first usage type and the SRS resource set configured with the second usage type, the terminal determines that the SRS resource set configured with the first usage type is further used for the second usage, or the terminal determines that the SRS resource which is simultaneously included in both the SRS resource set configured with the first usage type and the SRS resource set configured with the second usage type, is further used for the second usage.

The terminal determines usages of the SRS resource set of the first usage type and/or how to transmit SRS of the SRS resource set of the first usage type, according to whether the network device configures the SRS resource set of the second usage type for the terminal.

In the following, description will be made by taking the first usage type as "antennaSwitching" and the second usage type as "codebook" as an example. It is assumed that the network device does not configure an SRS resource set with a usage type "codebook" for the terminal in a certain bandwidth part (BWP). Then, the terminal can know that an SRS resource set whose usage type is configured as "antennaSwitching" in the BWP is used for uplink CSI acquisition on codebook-based PUSCH. Then, when the terminal transmits an SRS of the SRS resource set whose usage type is "antennaSwitching", the terminal needs to consider antenna virtualization, etc. If the network device configures an SRS resource set with a usage type "codebook" for the terminal in a certain bandwidth part (BWP), the terminal can know that when the terminal transmits an SRS of the SRS resource set whose usage type is "antennaSwitching" in the BWP, it does not need to assume that the SRS resource set is used for uplink CSI acquisition on codebook-based PUSCH.

In addition, the SRS resource sets configured by the network device for the terminal include both the SRS resource set configured with the first usage type and the SRS resource set configured with the second usage type, and there presents at least one SRS resource which is simultaneously included in the two resource sets. At this point, the SRS resource set configured with the first usage type or the same SRS resource is also used for the second usage.

It is to be understood that the SRS resource sets configured for the terminal include both the SRS resource set configured with the first usage type and the SRS resource set configured with the second usage type, and there presents at least one SRS resource which is simultaneously included in the two resource sets. At this point, SRS transmission corresponding to the at least one same SRS resource in the SRS resource set configured with the first usage type, is also used for the second usage at the same time.

In the following, description will be made by taking the first usage type as "antennaSwitching" and the second usage type as "codebook" as an example. It is assumed that the network device does not configure, for the terminal in a certain bandwidth part (BWP), both an SRS resource set with a usage type "codebook" and an SRS resource set with a usage type "antennaSwitching" and there presents an SRS resource which is simultaneously included in the two SRS resource sets. If the same SRS resource is marked as SRS resource 1, the terminal can know that an SRS resource set whose usage type is configured as "antennaSwitching" can be used for uplink CSI acquisition on codebook-based PUSCH. Then, when the terminal performs transmission on the SRS resource 1 in the SRS resource set whose usage type is "antennaSwitching", the terminal needs to consider performing antenna virtualization, etc.

Optionally, sending an SRS corresponding to the first SRS resource to the network device according to the first information, includes:
determining the first SRS resource according to the first information;
in case that the first SRS resource or the SRS resource set where the first SRS resource is included, is not configured with spatial relation information, sending the SRS corresponding to the first SRS resource set to the network device by using an uplink filter corresponding to spatial relation information indicated for SRS resources in an SRS resource set configured with one of the multiple usage types; or,
in case that the first SRS resource or the SRS resource set where the first SRS resource is included, is not configured with a transmission configuration indicator (TCI) state, sending the SRS corresponding to the first SRS resource set to the network device by using an uplink filter corresponding to a TCI state indicated for an SRS resource or an SRS resource set configured with one of the multiple usage types.

For example, in case that an SRS of the SRS resource set where the first SRS resource is included, is not configured with spatial relation information (which is a parameter of radio resource control (RRC) signaling), when the terminal performs SRS transmission of the first SRS resource set, the terminal performs the transmission by using an uplink filter corresponding to spatial relation information indicated for an SRS of an SRS resource set of one usage type among the multiple usage types, for example, spatial relation information configured for an SRS of an SRS resource set of a usage type antenanSwitching. It is to be noted that the same configuration as spatial relation information configured for any SRS of the first SRS resource set, can be found from spatial relation information indicated for an SRS resource set whose usage type is one of multiple usages indicated by the usage types of the first SRS resource set.

For another example, in case that an SRS of the first SRS resource set is not configured with a transmission configuration indicator (TCI) state, when the terminal performs SRS transmission of the first SRS resource set, the terminal performs the transmission by using an uplink filter corresponding to a TCI state indicated for an SRS resource set of one usage type among the multiple usage types, for example, TCI state configured for an SRS of an SRS resource set of a usage type antenanSwitching. It is to be noted that the same configuration as the TCI state configured for any SRS of the first SRS resource set, can be found from TCI states indicated for SRS resource sets whose usage types are one of the multiple usage types.

Optionally, sending an SRS corresponding to the first SRS resource to the network device according to the first information, includes:
determining the first SRS resource according to the first information;
determining an uplink filter for SRS transmission corresponding to the first SRS resource, according to one or more of multiple downlink filter for reception of physical downlink shared channel (PDSCH), and sending the SRS corresponding to the first SRS resource according to the uplink filter.

That is, in this embodiment, the uplink filter is determined according to one or more of the multiple downlink filter for reception of PDSCH. In this way, the stability of sending the SRS can be improved.

As an example, one or more of the multiple downlink filter for reception of PDSCH are taken as an uplink filter for SRS transmission corresponding to the first SRS resource, and the SRS corresponding to the first SRS resource is sent according to the uplink filter. As an example, the uplink filters used by SRSs of various SRS resources in the first SRS resource are different.

Optionally, the number of the first SRS resources is multiple. The sending an SRS corresponding to the first SRS resource to the network device according to the first information, includes:
determining the first SRS resources according to the first information;
using different transmission parameters to send SRSs corresponding to different SRS resources in the first SRS resources; where the transmission parameter include at least one of the following:
antenna port;
physical antenna; or
power amplifier.

In this way, transmission interference of SRSs corresponding to different SRS resources can be reduced, thereby improving transmission stability.

Optionally, after sending an SRS corresponding to the first SRS resource to the network device according to the first information, the method further includes: determining, according to the uplink filter for SRS transmission corresponding to the first SRS resource, downlink filter for reception of PDSCH sent by the network device. In this way, the stability of downlink reception can be improved.

As an example, the uplink filter used for SRS transmission corresponding to the first SRS resource can be taken as the downlink filter for reception of PDSCH sent by the network device.

That is, the terminal can use the uplink filter used for SRS transmission corresponding to the first SRS resource as the downlink filter for reception of PDSCH, and receive the PDSCH sent by the network device through the downlink filter.

For example, the first usage type is "codebook" (CSI acquisition on codebook-based PUSCH), and the second usage is downlink CSI acquisition (the usage type of the SRS resource set is antennaSwitching). The network device schedules the terminal to receive PDSCH. When the terminal receives the PDSCH, the terminal performs downlink filter by using the uplink filter used for SRS transmission of the SRS resource set whose usage type is codebook.

For another example, the first usage type is "nonCodebook" (CSI acquisition on non-codebook PUSCH), and the second usage is downlink CSI acquisition (the usage type of the SRS resource set is antennaSwitching). The network device schedules the terminal to receive PDSCH. When the terminal receives the PDSCH, the terminal performs downlink filter by using the uplink filter used for SRS transmission of the SRS resource set whose usage type is nonCodebook.

For another example, the first usage type is "codebook" (CSI acquisition on codebook-based PUSCH), the second usage is downlink CSI acquisition (the usage type of the SRS resource set is antennaSwitching), and there presents an SRS resource which is simultaneously included in both an SRS resource set configured with a usage type codebook and an SRS resource set configured with a usage type antennaSwitching. The network device schedules the terminal to receive PDSCH. When the terminal receives the PDSCH, the terminal performs downlink filter by using the uplink filter used for transmission on the same SRS resource when performing SRS transmission of the SRS resource set configured with the usage type codebook.

For another example, the first usage type is "nonCodebook" (CSI acquisition on non-codebook PUSCH), the second usage is downlink CSI acquisition (the usage type of the SRS resource set is antennaSwitching), and there presents an SRS resource which is simultaneously included in both an SRS resource set configured with a usage type nonCodebook and an SRS resource set configured with a usage type antennaSwitching. The network device schedules the terminal to receive PDSCH. When the terminal receives the PDSCH, the terminal performs downlink filter by using the uplink filter used for transmission on the same SRS resource when performing SRS transmission of the SRS resource set configured with the usage type nonCodebook.

Optionally, in the process of sending, to the network device, the SRS corresponding to the SRS resource set where the first SRS resource is included, SRSs corresponding to any two SRS resources in the SRS resource set where the first SRS resource is included, are transmitted at different moments; and no uplink signal is transmitted between any two SRS resources which are configured in the same slot and which are in the SRS resource set where the first SRS resource is included.

That is, the first SRS resource set where the first SRS resource is included includes multiple SRS resources of which at least two SRS resources are configured in the same slot. When the terminal needs to perform SRS transmission of the first SRS resource set, the terminal does not transmit any uplink signal between any two SRS resources which are in the first SRS resource set and which are in the same slot, thereby improving transmission stability.

Optionally, after sending an SRS corresponding to the first SRS resource to the network device according to the first information, the method further includes:
receiving SRS resource indication information of physical uplink shared channel (PUSCH) sent by the network device, where the SRS resource indication information indicates an SRS resource corresponding to transmission of the PUSCH;

Optionally, the SRS resource indication information indicates at least one SRS resource in the first SRS resource.

Optionally, the SRS resource indication information is associated with the latest SRS transmission of the first SRS resource before physical downlink control channel (PDCCH) carrying the SRS resource indication information.

A filter used by the terminal for transmission of PUSCH is the same as a filter for SRS transmission of an SRS resource indicated by the SRS resource indication information when performing the latest SRS transmission of the first SRS resource set before PDCCH carrying the SRS resource indication information. As an example, the filter includes spatial filter, that is, the terminal uses the same beamforming as the SRS transmission when transmitting the PUSCH.

Optionally, the foregoing method further includes:
determining a third SRS resource set that satisfies a first association relationship with transmission of PUSCH, where the first association relationship includes: a filter for transmission of PUSCH is determined according to a filter for SRS transmission of the third SRS resource set;
where the third SRS resource set is one of the SRS resource set configured with the first usage type and the second SRS resource set before PDCCH carrying scheduling information of the PUSCH, which is used for latest transmission; or,
the third SRS resource set is an SRS resource set for the latest transmission, in the SRS resource set configured with the first usage type and the second SRS resource set before PDCCH carrying scheduling information of the PUSCH.

Optionally, when the terminal performs transmission of the SRS resource set where the first SRS resource is included, the terminal uses different antenna ports for transmission of any two SRS resources in the same SRS resource set.

Optionally, the terminal further receives an SRS resource indicator (SRI) sent by the network device. The terminal determines, according to the SRI, an SRS resource used for determining an antenna port of PUSCH, in the SRS resource set. In this manner, the SRI can be used for antenna selection of PUSCH, thereby obtaining antenna selection gain.

Referring to FIG. 3, FIG. 3 is a flowchart of a signal transmission method according to an embodiment of the present disclosure. As shown in FIG. 3, the signal transmission method is performed by a network device, and includes the following steps:
Step 301: sending first information to a terminal, where the first information is used to indicate that a first SRS resource is used for multiple usages;
Step 302: receiving an SRS corresponding to the first SRS resource, which is sent by the terminal to the network device according to the first information.

Optionally, the first information is further used to indicate the first SRS resource set where the first SRS resource is included and/or indicate the first SRS resource.

Optionally, the first SRS resource includes all or part of SRS resources in an SRS resource set configured with a first usage type; the first information is further used to indicate that all or part of the SRS resources in the SRS resource set configured with the first usage type are also used for a second usage.

Optionally, the first SRS resource includes a specific SRS resource in an SRS resource set configured with a first usage type, and the first information is used to indicate that the specific SRS resource in the SRS resource set configured with the first usage type is further used for a second usage.

Optionally, the first SRS resource includes all or part of SRS resources in an SRS resource set configured with the first usage type and a time-domain type of a specific type. The first information is used to indicate that all or part of the SRS resources in the SRS resource set configured with the first usage type and the time-domain type of the specific type, are further used for the second usage.

Optionally, the first SRS resource includes a specific SRS resource in an SRS resource set configured with the first usage type and a time-domain type of a specific type, and the first information is used to indicate that the specific SRS resource in the SRS resource set configured with the first usage type and the time-domain type of the specific type, is further used for the second usage.

Optionally, the specific SRS resource includes at least one of the following:
an SRS resource indicated by the first information;
first s SRS resources with smallest indexes in an SRS resource set configured with first usage type, where s is a positive integer;
first m SRS resources with earliest transmission moment in an SRS resource set configured with first usage type, where m is a positive integer;
an SRS resource in a specific SRS resource set in an SRS resource set configured with first usage type;
an SRS resource, which is configured in an SRS resource set configured with first usage type and which is simultaneously configured in a second SRS resource set; where the second SRS resource set is an SRS resource set whose usage type is configured as a second usage type, and the second usage type is corresponding to a second usage;
first k SRS resources with smallest indexes in an SRS resource set configured with a first usage type and a time-domain type of a specific type, where k is a positive integer;
first n SRS resources with earliest transmission moment in an SRS resource set configured with a first usage type and a time-domain type of a specific type, where n is a positive integer;
an SRS resource in a specific SRS resource set in an SRS resource set configured with a first usage type and a time-domain type of a specific type; or,
an SRS resource, which is configured in an SRS resource set configured with a first usage type and a time-domain type of a specific type and which is simultaneously configured in a second SRS resource set; where the second usage type is corresponding to a second usage.

Optionally, the specific SRS resource set is one of the following:
an SRS resource set indicated by the first information;
first k SRS resource sets with smallest indexes in an SRS resource set configured with first usage type, where k is a positive integer;
first n SRS resource sets with earliest transmission moment in an SRS resource set configured with first usage type, where n is a positive integer;
first t SRS resource sets with smallest indexes in an SRS resource set configured with a first usage type and a time-domain type of a specific type, where t is a positive integer;
first r SRS resource sets with earliest transmission moment in an SRS resource set configured with a first usage type and a time-domain type of a specific type, where r is a positive integer.

Optionally, the first usage includes at least one of the following:
downlink channel state information (CSI) acquisition;
uplink CSI acquisition;
CSI acquisition on codebook-based physical shared channel (PUSCH);
CSI acquisition on non-codebook PUSCH;
beam management; or,
position.
   And/or

The second usage includes at least one of the following:
downlink CSI acquisition;
uplink CSI acquisition;
CSI acquisition on codebook-based PUSCH;
CSI acquisition on non-codebook PUSCH;
beam management; or,
position.

Optionally, the first SRS resource includes:
an SRS resource which is simultaneously included in both an SRS resource set configured with a first usage type and an SRS resource set configured with a second usage type.

Optionally, the first SRS resource includes: an SRS resource which is simultaneously included in both a first SRS resource set configured with a first usage type and a time-domain type of a specific type, and a second SRS resource set configured with a second usage type.

Optionally, the first information is carried in a first signaling or the first information is carried in an SRS resource set configuration signaling sent by the network device to the terminal.

The first signaling includes at least one of the following:
radio resource control (RRC) signaling;
medium access control-control element (MAC-CE) signaling;
downlink control information (DCI) signaling; or,
SRS trigger signaling.

Optionally, the first information is carried in an SRS resource set configuration signaling sent by the network device to the terminal.

In case that the SRS resource set configuration signaling does not configure an SRS resource set whose usage type is a second usage type, it indicates that an SRS resource set configured with a first usage type is further used for the second usage; or,
in case that the SRS resource set configuration signaling configures an SRS resource set whose usage type is the second usage type, and there presents an SRS resource which is simultaneously included in both the SRS resource set configured with the first usage type and the SRS resource set configured with the second usage type, it indicates that the SRS resource set configured with the first usage type is further used for the second usage, or that the SRS resource which is simultaneously included in both the SRS resource set configured with the first usage type and the SRS resource set configured with the second usage type, is further used for the second usage.

Optionally, the receiving an SRS corresponding to the first SRS resource, which is sent by the terminal to the network device according to the first information, includes:
determining an uplink reception filter for SRS transmission corresponding to the first SRS resource, according to one or more of multiple downlink transmission filter for transmission of physical downlink shared channel (PDSCH), and receiving the SRS corresponding to the first SRS resource according to the uplink reception filter.

It is to be noted that this embodiment is an implementation manner of the corresponding network device in the embodiment shown in FIG. 2, and the specific implementation may refer to relevant description of the embodiment shown in FIG. 2 with the same beneficial effects being achieved, which will not be repeated in this embodiment to avoid repetition.

Optionally, in case that the first usage type is "codebook" (CSI acquisition on codebook-based PUSCH) and the second usage is downlink CSI acquisition (the usage type of the SRS resource set is antennaSwitching), or, in case that the first usage type is "nonCodebook" (CSI acquisition on non-codebook PUSCH) and the second usage is downlink CSI acquisition (the usage type of the SRS resource set is antennaSwitching), when the terminal performs transmission of the SRS resource set configured with the first usage type, if the SRS resource set configured with the first usage type includes multiple SRS resources and there are several SRS resources are configured in the same slot, then, when the UE performs transmission on the several SRS resources which are configured in the same slot and which are in the SRS resource set configured with the first usage type, the UE performs no uplink transmission between the several SRS resources.

The foregoing signal transmission process will be described hereinafter with specific examples, where the network device is a base station, and the terminal is UE.

In the NR system, each SRS resource set may be configured with one or more SRS resources, and each SRS resource may include 1, 2 or 4 SRS ports for one BWP.

The base station can configure, for the UE, at most one SRS resource set with usage as "codebook". For the one SRS resource set, in the Rel-15 standard, a maximum of 2 SRS resources can be configured; when there are 2 SRS resources, each SRS resource includes the same SRS port. In the Rel-16 standard, when the UE is configured as full power transmission Mode 2, the UE can be configured with up to 4 SRS resources. When multiple SRS resources are configured, different SRS resources have the same or different SRS antenna port numbers. When the UE is not configured as full power transmission Mode 2, the UE can be configured with up to 2 SRS resources; when there are 2 SRS resources, each SRS resource includes the same SRS port. When multiple SRS resources are configured, these SRS resources can be configured with at most two different spatial relation parameters.

The base station can configure, for the UE, at most one SRS resource set with usage as "nonCodebook". For the one SRS resource set, a maximum of 4 SRS resources can be configured, and each SRS resource includes one antenna port. The base station can configure, for the UE, at most one SRS resource set with usage as "beamManagemen".

In one SRS resource set, K>=1 SRS resources may be configured, where the maximum value of K is determined according to capabilities of the UE. In each SRS resource set, only one SRS resource can be transmitted at a given moment. SRS resources, which are in different SRS resource sets with the same time domain type and which are in the same BWP, can be transmitted simultaneously at a given moment. When the number of transmitting antennas of the UE is smaller than the number of receiving antennas of the UE, the UE may transmit SRS in a manner of antenna switching, so that the base station perform downlink CSI acquisition of all receiving antennas through the SRS. Due to limitations of the UE's capabilities, the UE can be configured with one or more SRS resource sets whose usage is "antennaSwitching".

The base station may configure the UE with an SRS resource set whose antenna switching type is 1T=1R, 2T=2R, 4T=4R, 1T2R, 1T4R or 2T4R. For 1T=1R, 2T=2R or 4T=4R, at most two uplink sounding reference signal (SRS) resource sets can be configured, there is only one SRS resource in one SRS resource set, and the number of antenna ports is 1, 2 or 4, respectively.

For 1T2R, at most two SRS resource sets can be configured, one SRS resource set includes two SRS resources, and each SRS resource has only one port. The terminal sends one SRS resource from one antenna (physical antenna), and sends another SRS resource from another antenna (physical antenna).

For 2T4R, at most two SRS resource sets can be configured, and there are two SRS resources in one SRS resource set, and each SRS resource has two ports. The terminal sends one SRS resource from two antennas (physical antennas), and sends another SRS resource from the other two antennas (physical antennas).

For 1T4R, at most one uplink sounding reference signal (SRS) resource set whose time-domain type is periodic or semi-persistent can be configured, and the one uplink SRS resource set includes 4 SRS resources with a single SRS port; 2 SRS resource sets whose time-domain type is aperiodic can be configured, and the 2 SRS resource sets include a total of 4 SRS resources (each of the 2 SRS resource sets includes 2 SRS resources; or, one SRS resource set includes 1 SRS resource, and the other SRS resource set includes 3 SRS resources); these 4 SRS resources are sent in two slots, and these 4 SRS resources are sent through different physical antennas. The base station configures the same set of power control parameters for the 2 SRS resource sets, and the 2 resources are triggered by the same control signaling (DCI signaling).

When the UE transmits the SRS corresponding to the SRS resource set whose usage is "antennaSwitching", if multiple SRS resources in the same SRS resource set are transmitted in the same slot, a guard period needs to be left between the multiple SRS resources. In the guard period, the UE does not transmit any other signals. The guard periods under different subcarrier spacings are shown in the following table below, where the unit is symbol.

**Table 3**

| *µ* | Δ*f* = 2*^{µ}* · 15 [kHz] | Symbol interval |
|---|---|---|
| 0 | 15 | 1 |
| 1 | 30 | 1 |
| 2 | 60 | 1 |
| 3 | 120 | 2 |

All SRS resources in the SRS resource set whose usage is "antennaSwitching" include the same number of SRS ports.

For 1T2R, 1T4R or 2T4R, it is not expected by the UE that multiple SRS resource sets whose usage is "antennaSwitching" are triggered in the same slot. For 1T=1R, 2T=2R or 4T=4R, it is not expected by the UE that multiple SRS resource sets whose usage is "antennaSwitching" are triggered on the same symbol.

Since the UE does not consider requirements of uplink CSI acquisition and downlink CSI acquisition at the same time when performing transmission of SRS resources, the base station has to configure SRS resource sets for uplink CSI acquisition and downlink CSI acquisition, respectively, and perform triggering and transmission, respectively. This requires more SRS transmission overhead and scheduling overhead, which reduces system performance. In view of this, the signal transmission method provided in the embodiments of the present disclosure can reduce transmission overhead.

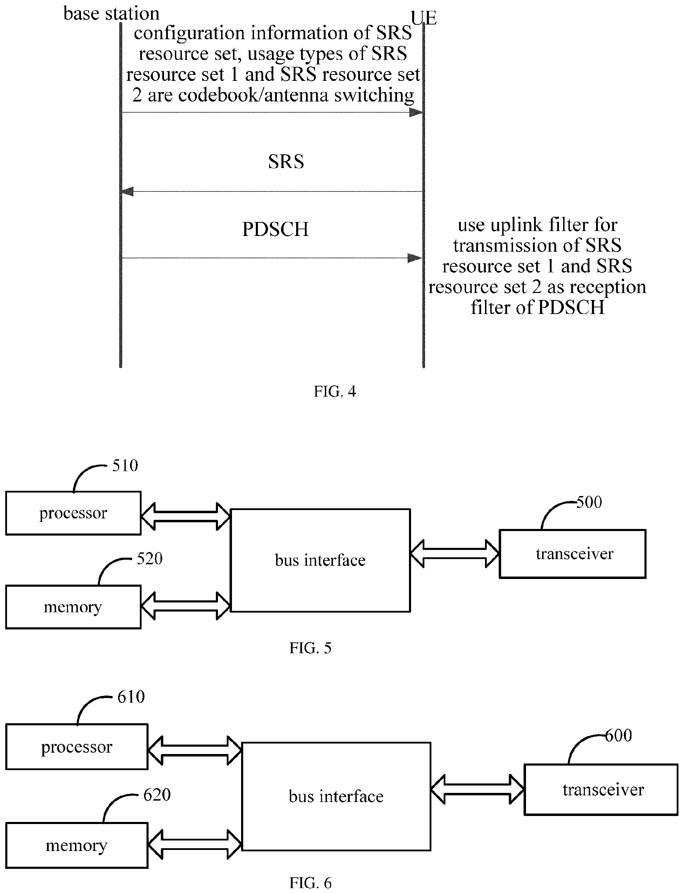

For example, as shown in FIG. 4, a base station sends configuration information of SRS resource sets (including a first SRS resource set (RSR set1) and a second SRS resource set (RSR set2)) to UE, where the configuration information includes multiple usage type signaling for simultaneously indicating the SRS resource sets for uplink CSI acquisition and downlink CSI acquisition (for example, the usage type is "codebook/antennaSwitching"). Both the first SRS resource set and the second SRS resource set are aperiodic SRS resource sets. The UE performs SRS transmission of the SRS resource sets, and different physical antennas are used for SRS transmission of any two SRS resources. The base station sends PDSCH to the UE. When receiving the PDSCH, the UE performs downlink filter by using uplink filter used for SRS transmission of the SRS resource set.

For another example, the base station sends configuration information of SRS resource sets to the UE. A usage type signaling of one of the SRS resource sets is configured as "codebook/antennaSwitching", that is, this SRS resource set can be used for CSI acquisition on codebook-based PUSCH and downlink CSI acquisition at the same time; and this SRS resource set is not configured with SpatialRelationInfo or TCI. A usage type signaling of the other of the SRS resource sets is configured as "codebook", and this SRS resource set is configured with SpatialRelationInfo or TCI. When the UE sends the SRS resource set whose usage type is configured as "codebook/antennaSwitching", the UE uses the SpatialRelationInfo or TCI configured in the SRS resource set whose usage type is configured as "codebook" to determine transmission spatial filter parameters of the SRS resource set whose usage type signaling is configured as "codebook/antennaSwitching".

Optionally, when the terminal sends the SRS resource set where the first SRS resource is included, any two SRS resources in the same SRS resource set are sent through different antenna ports.

The network device sends SRS resource indicator (SRI) information, which is used to indicate an SRS resource used for determining an antenna port of PUSCH, in the SRS resource set. In this way, the SRI can be used for antenna selection of PUSCH, thereby obtaining antenna selection gain.

In the present disclosure, by configuring the SRS resource set that can be used for both uplink CSI acquisition and downlink CSI acquisition, it is ensured that the UE can consider requirements of both uplink CSI acquisition and downlink CSI acquisition when performing transmission of SRS resources, so that the base station does not have to configure SRS resource sets separately for uplink CSI acquisition and downlink CSI acquisition, and trigger and transmit the SRS resource sets, respectively. In this way, the purpose of reducing SRS transmission overhead and DCI scheduling overhead and improving system performance is achieved.

Referring to FIG. 5, FIG. 5 is a schematic diagram of a terminal according to an embodiment of the present disclosure. As shown in FIG. 5, the terminal includes a memory 520, a transceiver 500, and a processor 510.

The memory is configured to store a computer program. The transceiver is configured to send and receive data under control of the processor. The processor is configured to read the computer program in the memory and perform the following operations:
receiving first information sent by a network device, where the first information is used to indicate that a first SRS resource is used for multiple usages;
sending an SRS corresponding to the first SRS resource to the network device according to the first information.

In FIG. 5, a bus architecture may include any number of interconnected bus and bridge. Specifically, various circuits of one or more processors, which are represented by the processor 510, and one or more memories, which are represented by the memory 520, are linked together. The bus architecture may link various other circuits, such as a peripheral device, voltage regulator and a power management circuit together. These features are well known in this field; therefore, this disclosure does not make further description on these features. The bus interface provides an interface. The transceiver 500 may be multiple elements, including a transmitter and a receiver and provide units, which communicate with other devices on the transmission medium. The transmission medium includes wireless channels, wired channels, and optical cables. For different terminals, a user interface 530 may also be an interface capable of externally connecting required devices, and the connected devices include but are not limited to keypads, displays, speakers, microphones, joysticks, etc.

The processor 510 is responsible for managing the bus architecture and the normal processing. The memory 520 may be used to store data used by the processor 510 for performing operations.

Optionally, the processor 510 may be a central processing unit (CPU), an application specific integrated circuit (ASIC), a field-programmable gate array (FPGA) or a complex programmable logic device (CPLD). The processor may also adopt multi-core architecture.

The processor is configured to call the computer program stored in the memory, and execute any method provided in the embodiments of the present disclosure according to obtained executable instructions. The processor and the memory may also be physically separated.

Optionally, the first information is further used to indicate the first SRS resource set where the first SRS resource is included and/or indicate the first SRS resource.

Optionally, the first SRS resource includes all or part of SRS resources in an SRS resource set configured with a first usage type; the first information is further used to indicate that all or part of the SRS resources in the SRS resource set configured with the first usage type are also used for a second usage.

Optionally, the first SRS resource includes a specific SRS resource in an SRS resource set configured with a first usage type, and the first information is used to indicate that the specific SRS resource in the SRS resource set configured with the first usage type is further used for a second usage.

Optionally, the first SRS resource includes all or part of SRS resources in an SRS resource set configured with the first usage type and a time-domain type of a specific type. The first information is used to indicate that all or part of the SRS resources in the SRS resource set configured with the first usage type and the time-domain type of the specific type, are further used for the second usage.

Optionally, the first SRS resource includes a specific SRS resource in an SRS resource set configured with the first usage type and a time-domain type of a specific type, and the first information is used to indicate that the specific SRS resource in the SRS resource set configured with the first usage type and the time-domain type of the specific type, is further used for the second usage.

Optionally, the specific SRS resource includes at least one of the following:
an SRS resource indicated by the first information;
first s SRS resources with smallest indexes in an SRS resource set configured with first usage type, where s is a positive integer;
first m SRS resources with earliest transmission moment in an SRS resource set configured with first usage type, where m is a positive integer;
an SRS resource in a specific SRS resource set in an SRS resource set configured with first usage type;
an SRS resource, which is configured in an SRS resource set configured with first usage type and which is simultaneously configured in a second SRS resource set; where the second SRS resource set is an SRS resource set whose usage type is configured as a second usage type;
first k SRS resources with smallest indexes in an SRS resource set configured with a first usage type and a time-domain type of a specific type, where k is a positive integer;
first n SRS resources with earliest transmission moment in an SRS resource set configured with a first usage type and a time-domain type of a specific type, where n is a positive integer;
an SRS resource in a specific SRS resource set in an SRS resource set configured with a first usage type and a time-domain type of a specific type; or,
an SRS resource, which is configured in an SRS resource set configured with a first usage type and a time-domain type of a specific type and which is simultaneously configured in a second SRS resource set.

Optionally, the specific SRS resource set is one of the following:
an SRS resource set indicated by the first information;
first k SRS resource sets with smallest indexes in an SRS resource set configured with first usage type, where k is a positive integer;
first n SRS resource sets with earliest transmission moment in an SRS resource set configured with first usage type, where n is a positive integer;
first t SRS resource sets with smallest indexes in an SRS resource set configured with a first usage type and a time-domain type of a specific type, where t is a positive integer;
first r SRS resource sets with earliest transmission moment in an SRS resource set configured with a first usage type and a time-domain type of a specific type, where r is a positive integer.

Optionally, the first usage includes at least one of the following:
downlink channel state information (CSI) acquisition;
uplink CSI acquisition;
CSI acquisition on codebook-based physical shared channel (PUSCH);
CSI acquisition on non-codebook PUSCH;
beam management; or,
position.
   And/or

The second usage includes at least one of the following:
downlink CSI acquisition;
uplink CSI acquisition;
CSI acquisition on codebook-based PUSCH;
CSI acquisition on non-codebook PUSCH;
beam management; or,
position.

Optionally, sending an SRS corresponding to the first SRS resource to the network device according to the first information, includes:
determining the first SRS resource according to the first information;
in case that the second usage is downlink CSI acquisition, determining uplink filter of SRS corresponding to the first SRS resource according to downlink filter of a specific signal;
sending the SRS corresponding to the first SRS resource to the network device, based on the uplink filter of the SRS corresponding to the first SRS resource.

Optionally, the first SRS resource includes:
an SRS resource which is simultaneously included in both an SRS resource set configured with a first usage type and an SRS resource set configured with a second usage type.

Optionally, the first SRS resource includes: an SRS resource which is simultaneously included in both a first SRS resource set configured with a first usage type and a time-domain type of a specific type, and a second SRS resource set.

Optionally, the first information is carried in an SRS resource set configuration signaling sent by the network device to the terminal.

In case that the SRS resource set configuration signaling does not configure an SRS resource set whose usage type is a second usage type, the terminal determines that an SRS resource set configured with a first usage type is further used for the second usage; or,
in case that the SRS resource set configuration signaling configures an SRS resource set whose usage type is the second usage type, and there presents an SRS resource which is simultaneously included in both the SRS resource set configured with the first usage type and the SRS resource set configured with the second usage type, the terminal determines that the SRS resource set configured with the first usage type is further used for the second usage, or the terminal determines that the SRS resource which is simultaneously included in both the SRS resource set configured with the first usage type and the SRS resource set configured with the second usage type, is further used for the second usage.

Optionally, sending an SRS corresponding to the first SRS resource to the network device according to the first information, includes:
determining the first SRS resource according to the first information;
in case that the first SRS resource or the SRS resource set where the first SRS resource is included, is not configured with spatial relation information, sending the SRS corresponding to the first SRS resource set to the network device by using an uplink filter corresponding to spatial relation information indicated for SRS resources in an SRS resource set configured with one of the multiple usage types; or,
in case that the first SRS resource or the SRS resource set where the first SRS resource is included, is not configured with a transmission configuration indicator (TCI) state, sending the SRS corresponding to the first SRS resource set to the network device by using an uplink filter corresponding to a TCI state indicated for an SRS resource or an SRS resource set configured with one of the multiple usage types.

Optionally, sending an SRS corresponding to the first SRS resource to the network device according to the first information, includes:
determining the first SRS resource according to the first information;
determining an uplink filter for SRS transmission corresponding to the first SRS resource, according to one or more of multiple downlink filters for reception of physical downlink shared channel (PDSCH), and sending the SRS corresponding to the first SRS resource according to the uplink filter.

Optionally, after sending an SRS corresponding to the first SRS resource to the network device according to the first information, the method further includes:
determining, according to the uplink filter for SRS transmission corresponding to the first SRS resource, downlink filter for reception of PDSCH sent by the network device.

Optionally, in the process of sending, to the network device, the SRS corresponding to the SRS resource set where the first SRS resource is included, SRSs corresponding to any two SRS resources in the SRS resource set where the first SRS resource is included, are transmitted at different moments; and no uplink signal is transmitted between any two SRS resources which are configured in the same slot and which are in the SRS resource set where the first SRS resource is included.

It is to be noted here that the foregoing terminal provided in the embodiments of the present disclosure can implement all steps implemented by the foregoing method embodiments, and can achieve the same technical effect. Parts and beneficial effects in this embodiment that are the same as those in the method embodiment will not be described in detail here.

Referring to FIG. 6, FIG. 6 is a schematic diagram of a network device according to an embodiment of the present disclosure. As shown in FIG. 6, the network device includes a memory 620, a transceiver 600, and a processor 610.

The memory is configured to store a computer program. The transceiver is configured to send and receive data under control of the processor. The processor is configured to read the computer program in the memory and perform the following operations:

sending first information to a terminal, where the first information is used to indicate that a first SRS resource is used for multiple usages; and, receiving an SRS corresponding to the first SRS resource, which is sent by the terminal to the network device according to the first information.

In FIG. 6, a bus architecture may include any number of interconnected bus and bridge. Specifically, various circuits of one or more processors, which are represented by the processor 610, and one or more memories, which are represented by the memory 620, are linked together. The bus architecture may link various other circuits, such as a peripheral device, voltage regulator and a power management circuit together. These features are well known in this field; therefore, this disclosure does not make further description on these features. The bus interface provides an interface. The transceiver 600 may be multiple elements, including a transmitter and a receiver and provide units, which communicate with other devices on the transmission medium. The transmission medium includes wireless channels, wired channels, and optical cables. The processor 610 is responsible for managing the bus architecture and the normal processing. The memory 620 may be used to store data used by the processor 610 for performing operations.

Optionally, the processor 610 may be a central processing unit (CPU), an application specific integrated circuit (ASIC), a field-programmable gate array (FPGA) or a complex programmable logic device (CPLD). The processor may also adopt multi-core architecture.

The processor is configured to call the computer program stored in the memory, and execute any method provided in the embodiments of the present disclosure according to obtained executable instructions. The processor and the memory may also be physically separated.

Optionally, the first information includes first indication information or/and second indication information.

The first indication information indicates the first SRS resource set where the first SRS resource is included, and the second indication information indicates information of the first SRS resource.

Optionally, the first information is further used to indicate the first SRS resource set where the first SRS resource is included and/or indicate the first SRS resource.

Optionally, the first SRS resource includes all or part of SRS resources in an SRS resource set configured with a first usage type; the first information is further used to indicate that all or part of the SRS resources in the SRS resource set configured with the first usage type are also used for a second usage.

Optionally, the first SRS resource includes a specific SRS resource in an SRS resource set configured with a first usage type, and the first information is used to indicate that the specific SRS resource in the SRS resource set configured with the first usage type is further used for a second usage.

Optionally, the first SRS resource includes all or part of SRS resources in an SRS resource set configured with the first usage type and a time-domain type of a specific type. The first information is used to indicate that all or part of the SRS resources in the SRS resource set configured with the first usage type and the time-domain type of the specific type, are further used for the second usage.

Optionally, the first SRS resource includes a specific SRS resource in an SRS resource set configured with the first usage type and a time-domain type of a specific type, and the first information is used to indicate that the specific SRS resource in the SRS resource set configured with the first usage type and the time-domain type of the specific type, is further used for the second usage.

Optionally, the specific SRS resource includes at least one of the following:
an SRS resource indicated by the first information;
first s SRS resources with smallest indexes in an SRS resource set configured with first usage type, where s is a positive integer;
first m SRS resources with earliest transmission moment in an SRS resource set configured with first usage type, where m is a positive integer;
an SRS resource in a specific SRS resource set in an SRS resource set configured with first usage type;
an SRS resource, which is configured in an SRS resource set configured with first usage type and which is simultaneously configured in a second SRS resource set; where the second SRS resource set is an SRS resource set whose usage type is configured as a second usage type, and the second usage type is corresponding to a second usage;
first k SRS resources with smallest indexes in an SRS resource set configured with a first usage type and a time-domain type of a specific type, where k is a positive integer;
first n SRS resources with earliest transmission moment in an SRS resource set configured with a first usage type and a time-domain type of a specific type, where n is a positive integer;
an SRS resource in a specific SRS resource set in an SRS resource set configured with a first usage type and a time-domain type of a specific type; or,
an SRS resource, which is configured in an SRS resource set configured with a first usage type and a time-domain type of a specific type and which is simultaneously configured in a second SRS resource set; where the second usage type is corresponding to a second usage.

Optionally, the specific SRS resource set is one of the following:
an SRS resource set indicated by the first information;
first k SRS resource sets with smallest indexes in an SRS resource set configured with first usage type, where k is a positive integer;
first n SRS resource sets with earliest transmission moment in an SRS resource set configured with first usage type, where n is a positive integer;
first t SRS resource sets with smallest indexes in an SRS resource set configured with a first usage type and a time-domain type of a specific type, where t is a positive integer;
first r SRS resource sets with earliest transmission moment in an SRS resource set configured with a first usage type and a time-domain type of a specific type, where r is a positive integer.

Optionally, the first usage includes at least one of the following:
downlink channel state information (CSI) acquisition;
uplink CSI acquisition;
CSI acquisition on codebook-based physical shared channel (PUSCH);
CSI acquisition on non-codebook PUSCH;
beam management; or,
position.
   And/or

The second usage includes at least one of the following:
downlink CSI acquisition;
uplink CSI acquisition;
CSI acquisition on codebook-based PUSCH;
CSI acquisition on non-codebook PUSCH;
beam management; or,
position.

Optionally, the first SRS resource includes:
an SRS resource which is simultaneously included in both an SRS resource set configured with a first usage type and an SRS resource set configured with a second usage type.

Optionally, the first SRS resource includes: an SRS resource which is simultaneously included in both a first SRS resource set configured with a first usage type and a time-domain type of a specific type, and a second SRS resource set configured with a second usage type.

Optionally, the first information is carried in a first signaling or the first information is carried in an SRS resource set configuration signaling sent by the network device to the terminal.

The first signaling includes at least one of the following:
radio resource control (RRC) signaling;
medium access control-control element (MAC-CE) signaling;
downlink control information (DCI) signaling; or,
SRS trigger signaling.

Optionally, the first information is carried in an SRS resource set configuration signaling sent by the network device to the terminal.

In case that the SRS resource set configuration signaling does not configure an SRS resource set whose usage type is a second usage type, it indicates that an SRS resource set configured with a first usage type is further used for the second usage; or,

in case that the SRS resource set configuration signaling configures an SRS resource set whose usage type is the second usage type, and there presents an SRS resource which is simultaneously included in both the SRS resource set configured with the first usage type and the SRS resource set configured with the second usage type, it indicates that the SRS resource set configured with the first usage type is further used for the second usage, or that the SRS resource which is simultaneously included in both the SRS resource set configured with the first usage type and the SRS resource set configured with the second usage type, is further used for the second usage.

Optionally, the receiving an SRS corresponding to the first SRS resource, which is sent by the terminal to the network device according to the first information, includes:

determining an uplink reception filter for SRS transmission corresponding to the first SRS resource, according to one or more of multiple downlink transmission filter for transmission of physical downlink shared channel (PDSCH), and receiving the SRS corresponding to the first SRS resource according to the uplink reception filter.

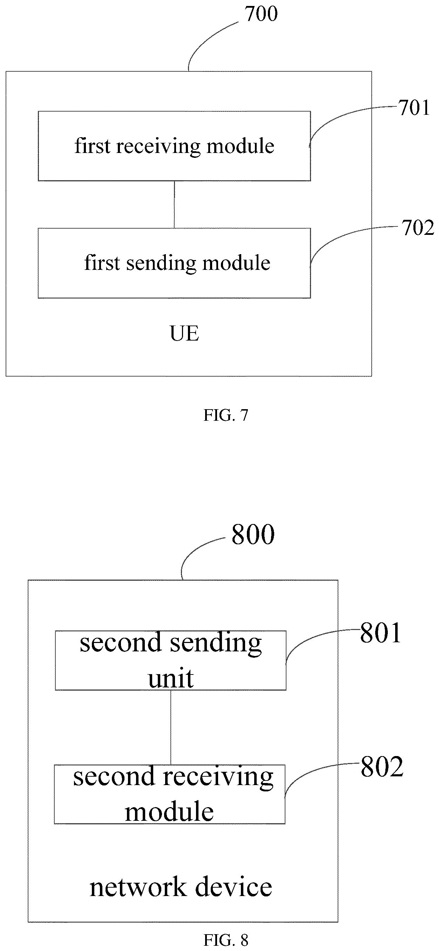

Referring to FIG. 7, FIG. 7 is a schematic diagram of a terminal according to an embodiment of the present disclosure. As shown in FIG. 7, the terminal 700 includes:
a first receiving module 701 configured to receive first information sent by a network device, where the first information is used to indicate that a first SRS resource is used for multiple usages;
a first sending module 702 configured to send an SRS corresponding to the first SRS resource to the network device according to the first information.

Optionally, the first information is further used to indicate the first SRS resource set where the first SRS resource is included and/or indicate the first SRS resource.

Optionally, the first SRS resource includes all or part of SRS resources in an SRS resource set configured with a first usage type; the first information is further used to indicate that all or part of the SRS resources in the SRS resource set configured with the first usage type are also used for a second usage.

Optionally, the first SRS resource includes a specific SRS resource in an SRS resource set configured with a first usage type, and the first information is used to indicate that the specific SRS resource in the SRS resource set configured with the first usage type is further used for a second usage.

Optionally, the first SRS resource includes all or part of SRS resources in an SRS resource set configured with the first usage type and a time-domain type of a specific type. The first information is used to indicate that all or part of the SRS resources in the SRS resource set configured with the first usage type and the time-domain type of the specific type, are further used for the second usage.

Optionally, the first SRS resource includes a specific SRS resource in an SRS resource set configured with the first usage type and a time-domain type of a specific type, and the first information is used to indicate that the specific SRS resource in the SRS resource set configured with the first usage type and the time-domain type of the specific type, is further used for the second usage.

Optionally, the specific SRS resource includes at least one of the following:
an SRS resource indicated by the first information;
first s SRS resources with smallest indexes in an SRS resource set configured with first usage type, where s is a positive integer;
first m SRS resources with earliest transmission moment in an SRS resource set configured with first usage type, where m is a positive integer;
an SRS resource in a specific SRS resource set in an SRS resource set configured with first usage type;
an SRS resource, which is configured in an SRS resource set configured with first usage type and which is simultaneously configured in a second SRS resource set; where the second SRS resource set is an SRS resource set whose usage type is configured as a second usage type;
first k SRS resources with smallest indexes in an SRS resource set configured with a first usage type and a time-domain type of a specific type, where k is a positive integer;
first n SRS resources with earliest transmission moment in an SRS resource set configured with a first usage type and a time-domain type of a specific type, where n is a positive integer;
an SRS resource in a specific SRS resource set in an SRS resource set configured with a first usage type and a time-domain type of a specific type; or,
an SRS resource, which is configured in an SRS resource set configured with a first usage type and a time-domain type of a specific type and which is simultaneously configured in a second SRS resource set.

Optionally, the specific SRS resource set is one of the following:
an SRS resource set indicated by the first information;
first k SRS resource sets with smallest indexes in an SRS resource set configured with first usage type, where k is a positive integer;
first n SRS resource sets with earliest transmission moment in an SRS resource set configured with first usage type, where n is a positive integer;
first t SRS resource sets with smallest indexes in an SRS resource set configured with a first usage type and a time-domain type of a specific type, where t is a positive integer;
first r SRS resource sets with earliest transmission moment in an SRS resource set configured with a first usage type and a time-domain type of a specific type, where r is a positive integer.

Optionally, the first usage includes at least one of the following:
downlink channel state information (CSI) acquisition;
uplink CSI acquisition;
CSI acquisition on codebook-based physical shared channel (PUSCH);
CSI acquisition on non-codebook PUSCH;
beam management; or,
position.
   And/or

The second usage includes at least one of the following:
downlink CSI acquisition;
uplink CSI acquisition;
CSI acquisition on codebook-based PUSCH;
CSI acquisition on non-codebook PUSCH;
beam management; or,
position.

Optionally, sending an SRS corresponding to the first SRS resource to the network device according to the first information, includes:
determining the first SRS resource according to the first information;
in case that the second usage is downlink CSI acquisition, determining uplink filter of SRS corresponding to the first SRS resource according to downlink filter of a specific signal;
sending the SRS corresponding to the first SRS resource to the network device, based on the uplink filter of the SRS corresponding to the first SRS resource.

Optionally, the first SRS resource includes:
an SRS resource which is simultaneously included in both an SRS resource set configured with a first usage type and an SRS resource set configured with a second usage type.

Optionally, the first SRS resource includes: an SRS resource which is simultaneously included in both a first SRS resource set configured with a first usage type and a time-domain type of a specific type, and a second SRS resource set.

Optionally, the first information is carried in an SRS resource set configuration signaling sent by the network device to the terminal.

In case that the SRS resource set configuration signaling does not configure an SRS resource set whose usage type is a second usage type, the terminal determines that an SRS resource set configured with a first usage type is further used for the second usage; or,

in case that the SRS resource set configuration signaling configures an SRS resource set whose usage type is the second usage type, and there presents an SRS resource which is simultaneously included in both the SRS resource set configured with the first usage type and the SRS resource set configured with the second usage type, the terminal determines that the SRS resource set configured with the first usage type is further used for the second usage, or the terminal determines that the SRS resource which is simultaneously included in both the SRS resource set configured with the first usage type and the SRS resource set configured with the second usage type, is further used for the second usage.

Optionally, sending an SRS corresponding to the first SRS resource to the network device according to the first information, includes:
determining the first SRS resource according to the first information;
in case that the first SRS resource or the SRS resource set where the first SRS resource is included, is not configured with spatial relation information, sending the SRS corresponding to the first SRS resource set to the network device by using an uplink filter corresponding to spatial relation information indicated for SRS resources in an SRS resource set configured with one of the multiple usage types; or,
in case that the first SRS resource or the SRS resource set where the first SRS resource is included, is not configured with a transmission configuration indicator (TCI) state, sending the SRS corresponding to the first SRS resource set to the network device by using an uplink filter corresponding to a TCI state indicated for an SRS resource or an SRS resource set configured with one of the multiple usage types.

Optionally, sending an SRS corresponding to the first SRS resource to the network device according to the first information, includes:
determining the first SRS resource according to the first information;
determining an uplink filter for SRS transmission corresponding to the first SRS resource, according to one or more of multiple downlink filters for reception of physical downlink shared channel (PDSCH), and sending the SRS corresponding to the first SRS resource according to the uplink filter.

Optionally, after sending an SRS corresponding to the first SRS resource to the network device according to the first information, the method further includes:
determining, according to the uplink filter for SRS transmission corresponding to the first SRS resource, downlink filter for reception of PDSCH sent by the network device.

Optionally, in the process of sending, to the network device, the SRS corresponding to the SRS resource set where the first SRS resource is included, SRSs corresponding to any two SRS resources in the SRS resource set where the first SRS resource is included, are transmitted at different moments; and no uplink transmission is performed between any two SRS resources which are configured in the same slot and which are in the SRS resource set where the first SRS resource is included.

Optionally, when the terminal performs transmission of the SRS resource set where the first SRS resource is included, the terminal uses different antenna ports for transmission of any two SRS resources in the same SRS resource set.

Optionally, the terminal further receives an SRS resource indicator (SRI) sent by the network device. The terminal determines, according to the SRI, an SRS resource used for determining an antenna port of PUSCH, in the SRS resource set. In this manner, the SRI can be used for antenna selection of PUSCH, thereby obtaining antenna selection gain.

It is to be noted here that the foregoing terminal provided in the embodiments of the present disclosure can implement all steps implemented by the foregoing method embodiments, and can achieve the same technical effect. Parts and beneficial effects in this embodiment that are the same as those in the method embodiment will not be described in detail here.

Referring to FIG. 8, FIG. 8 is a schematic diagram of a network device according to an embodiment of the present disclosure. As shown in FIG. 8, the network device 800 includes:
a second sending unit 801 configured to send first information to a terminal, where the first information is used to indicate that a first SRS resource is used for multiple usages;
a second receiving module 802 configured to receive an SRS corresponding to the first SRS resource, which is sent by the terminal to the network device according to the first information.

Optionally, the first information is further used to indicate the first SRS resource set where the first SRS resource is included and/or indicate the first SRS resource.

Optionally, the first SRS resource includes all or part of SRS resources in an SRS resource set configured with a first usage type; the first information is further used to indicate that all or part of the SRS resources in the SRS resource set configured with the first usage type are also used for a second usage.

Optionally, the first SRS resource includes a specific SRS resource in an SRS resource set configured with a first usage type, and the first information is used to indicate that the specific SRS resource in the SRS resource set configured with the first usage type is further used for a second usage.

Optionally, the first SRS resource includes all or part of SRS resources in an SRS resource set configured with the first usage type and a time-domain type of a specific type. The first information is used to indicate that all or part of the SRS resources in the SRS resource set configured with the first usage type and the time-domain type of the specific type, are further used for the second usage.

Optionally, the first SRS resource includes a specific SRS resource in an SRS resource set configured with the first usage type and a time-domain type of a specific type, and the first information is used to indicate that the specific SRS resource in the SRS resource set configured with the first usage type and the time-domain type of the specific type, is further used for the second usage.

Optionally, the specific SRS resource includes at least one of the following:
an SRS resource indicated by the first information;
first s SRS resources with smallest indexes in an SRS resource set configured with first usage type, where s is a positive integer;
first m SRS resources with earliest transmission moment in an SRS resource set configured with first usage type, where m is a positive integer;
an SRS resource in a specific SRS resource set in an SRS resource set configured with first usage type;
an SRS resource, which is configured in an SRS resource set configured with first usage type and which is simultaneously configured in a second SRS resource set; where the second SRS resource set is an SRS resource set whose usage type is configured as a second usage type, and the second usage type is corresponding to a second usage;
first k SRS resources with smallest indexes in an SRS resource set configured with a first usage type and a time-domain type of a specific type, where k is a positive integer;
first n SRS resources with earliest transmission moment in an SRS resource set configured with a first usage type and a time-domain type of a specific type, where n is a positive integer;
an SRS resource in a specific SRS resource set in an SRS resource set configured with a first usage type and a time-domain type of a specific type; or,
an SRS resource, which is configured in an SRS resource set configured with a first usage type and a time-domain type of a specific type and which is simultaneously configured in a second SRS resource set; where the second usage type is corresponding to a second usage.

Optionally, the specific SRS resource set is one of the following:
an SRS resource set indicated by the first information;
first k SRS resource sets with smallest indexes in an SRS resource set configured with first usage type, where k is a positive integer;
first n SRS resource sets with earliest transmission moment in an SRS resource set configured with first usage type, where n is a positive integer;
first t SRS resource sets with smallest indexes in an SRS resource set configured with a first usage type and a time-domain type of a specific type, where t is a positive integer;
first r SRS resource sets with earliest transmission moment in an SRS resource set configured with a first usage type and a time-domain type of a specific type, where r is a positive integer.

Optionally, the first usage includes at least one of the following:
downlink channel state information (CSI) acquisition;
uplink CSI acquisition;
CSI acquisition on codebook-based physical shared channel (PUSCH);
CSI acquisition on non-codebook PUSCH;
beam management; or,
position.
   And/or

The second usage includes at least one of the following:
downlink CSI acquisition;
uplink CSI acquisition;
CSI acquisition on codebook-based PUSCH;
CSI acquisition on non-codebook PUSCH;
beam management; or,
position.

Optionally, the first SRS resource includes:
an SRS resource which is simultaneously included in both an SRS resource set configured with a first usage type and an SRS resource set configured with a second usage type.

Optionally, the first SRS resource includes: an SRS resource which is simultaneously included in both a first SRS resource set configured with a first usage type and a time-domain type of a specific type, and a second SRS resource set configured with a second usage type.

Optionally, the first information is carried in a first signaling or the first information is carried in an SRS resource set configuration signaling sent by the network device to the terminal.

The first signaling includes at least one of the following:
radio resource control (RRC) signaling;
medium access control-control element (MAC-CE) signaling;
downlink control information (DCI) signaling; or,
SRS trigger signaling.

Optionally, the first information is carried in an SRS resource set configuration signaling sent by the network device to the terminal.

In case that the SRS resource set configuration signaling does not configure an SRS resource set whose usage type is a second usage type, it indicates that an SRS resource set configured with a first usage type is further used for the second usage; or,
in case that the SRS resource set configuration signaling configures an SRS resource set whose usage type is the second usage type, and there presents an SRS resource which is simultaneously included in both the SRS resource set configured with the first usage type and the SRS resource set configured with the second usage type, it indicates that the SRS resource set configured with the first usage type is further used for the second usage, or that the SRS resource which is simultaneously included in both the SRS resource set configured with the first usage type and the SRS resource set configured with the second usage type, is further used for the second usage.

Optionally, the receiving an SRS corresponding to the first SRS resource, which is sent by the terminal to the network device according to the first information, includes:
determining an uplink reception filter for SRS transmission corresponding to the first SRS resource, according to one or more of multiple downlink transmission filter for transmission of physical downlink shared channel (PDSCH), and receiving the SRS corresponding to the first SRS resource according to the uplink reception filter.

It is to be noted here that the foregoing network device provided in the embodiments of the present disclosure can implement all steps implemented by the foregoing method embodiments, and can achieve the same technical effect. Parts and beneficial effects in this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium which includes a computer program stored thereon. The computer program is configured to cause the processor to execute the signal transmission method provided in the embodiment of the present disclosure.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, nonvolatile memory (Nand flash), solid-state drive (SSD)).

Each module, unit, subunit or submodule may be one or more integrated circuits configured to implement the above method, for example, one or more application specific integrated circuits (ASICs), or, one or more microprocessor (such as digital signal processor (DSP)), or, one or more field programmable gate arrays (FPGA). For another example, when one of the above modules is implemented in the form of scheduling program codes by a processing element, the processing element may be a general-purpose processor, such as a central processing unit (CPU) or other processors that can call program codes. For another example, these modules may be integrated together and implemented in the form of a system-on-a-chip (SOC).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and /or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Apparently, those skilled in the art can make various changes and modifications to the present application without departing from the spirit and scope of the present application. In this way, if these modifications and changes of the present application fall within the scope of the claims of the present application and its equivalent technology, the present application is also intended to include these modifications and changes.

## Claims

1. A signal transmission method, performed by a terminal, comprising:
receiving first information sent by a network device, wherein the first information is used to indicate that a first sounding reference signal (SRS) resource is used for multiple usages; and
sending an SRS corresponding to the first SRS resource to the network device according to the first information.

2. The method according to claim 1, wherein the first information is further used to indicate a first SRS resource set where the first SRS resource is included and/or indicate the first SRS resource.

3. The method according to claim 1 or 2, wherein the first SRS resource includes all or part of SRS resources in an SRS resource set configured with a first usage type; the first information is further used to indicate that all or part of the SRS resources in the SRS resource set configured with the first usage type are further used for a second usage.

4. The method according to claim 3, wherein the first SRS resource includes a specific SRS resource in the SRS resource set configured with the first usage type, and the first information is used to indicate that the specific SRS resource in the SRS resource set configured with the first usage type is further used for the second usage.

5. The method according to claim 3, wherein the first SRS resource includes all or part of SRS resources in the SRS resource set which is configured with the first usage type and a time-domain type of a specific type; the first information is used to indicate that all or part of the SRS resources in the SRS resource set which is configured with the first usage type and the time-domain type of the specific type, are further used for the second usage.

6. The method according to claim 5, wherein the first SRS resource includes a specific SRS resource in the SRS resource set which is configured with the first usage type and the time-domain type of the specific type; and the first information is used to indicate that the specific SRS resource in the SRS resource set which is configured with the first usage type and the time-domain type of the specific type, is further used for the second usage.

7. The method according to claim 4 or 6, wherein the specific SRS resource includes at least one of the following:
an SRS resource indicated by the first information;
first s SRS resources with smallest indexes in the SRS resource set configured with the first usage type, wherein s is a positive integer;
first m SRS resources with earliest transmission moment in the SRS resource set configured with the first usage type, wherein m is a positive integer;
an SRS resource in a specific SRS resource set in the SRS resource set configured with the first usage type;
an SRS resource, which is configured in the SRS resource set configured with the first usage type and which is simultaneously configured in a second SRS resource set; wherein the second SRS resource set is an SRS resource set whose usage type is configured as a second usage type,
first k SRS resources with smallest indexes in the SRS resource set configured with the first usage type and the time-domain type of the specific type, wherein k is a positive integer;
first n SRS resources with earliest transmission moment in the SRS resource set configured with the first usage type and the time-domain type of the specific type, wherein n is a positive integer;
an SRS resource in a specific SRS resource set in the SRS resource set configured with the first usage type and the time-domain type of the specific type; or,
an SRS resource, which is configured in the SRS resource set configured with the first usage type and the time-domain type of the specific type and which is simultaneously configured in the second SRS resource set.

8. The method according to claim 7, wherein the specific SRS resource set is one of the following:
an SRS resource set indicated by the first information;
first k SRS resource sets with smallest indexes in the SRS resource set configured with the first usage type, wherein k is a positive integer;
first n SRS resource sets with earliest transmission moment in the SRS resource set configured with the first usage type, wherein n is a positive integer;
first t SRS resource sets with smallest indexes in the SRS resource set configured with the first usage type and the time-domain type of the specific type, wherein t is a positive integer;
first r SRS resource sets with earliest transmission moment in the SRS resource set configured with the first usage type and the time-domain type of the specific type, wherein r is a positive integer.

9. The method according to claim 3, wherein the first usage includes at least one of the following:
downlink channel state information (CSI) acquisition;
uplink CSI acquisition;
CSI acquisition on codebook-based physical shared channel (PUSCH);
CSI acquisition on non-codebook PUSCH;
beam management; or,
position;
and/or,
the second usage includes at least one of the following:
downlink CSI acquisition;
uplink CSI acquisition;
CSI acquisition on codebook-based PUSCH;
CSI acquisition on non-codebook PUSCH;
beam management; or,
position.

10. The method according to claim 3, wherein the sending an SRS corresponding to the first SRS resource to the network device according to the first information, includes:
determining the first SRS resource according to the first information;
in case that the second usage is downlink CSI acquisition, determining uplink filter of the SRS corresponding to the first SRS resource according to downlink filter of a specific signal; and
sending the SRS corresponding to the first SRS resource to the network device, based on the uplink filter of the SRS corresponding to the first SRS resource.

11. The method according to claim 3, wherein the first SRS resource includes: an SRS resource which is simultaneously included in both the SRS resource set configured with the first usage type and the SRS resource set configured with the second usage type.

12. The method according to claim 11, wherein the first SRS resource includes an SRS resource which is simultaneously included in both the SRS resource set configured with the first usage type and the time-domain type of the specific type, and the second SRS resource set configured with the second usage type.

13. The method according to claim 3, wherein the first information is carried in an SRS resource set configuration signaling sent by the network device to the terminal;
in case that the SRS resource set configuration signaling does not configure an SRS resource set whose usage type is the second usage type, the terminal determines that the SRS resource set configured with the first usage type is further used for the second usage; or,
in case that the SRS resource set configuration signaling configures an SRS resource set whose usage type is the second usage type, and there presents an SRS resource which is simultaneously included in both the SRS resource set configured with the first usage type and the SRS resource set configured with the second usage type, the terminal determines that the SRS resource set configured with the first usage type is further used for the second usage, or the terminal determines that the SRS resource which is simultaneously included in both the SRS resource set configured with the first usage type and the SRS resource set configured with the second usage type, is further used for the second usage.

14. The method according to claim 3, wherein the sending an SRS corresponding to the first SRS resource to the network device according to the first information, includes:
determining the first SRS resource according to the first information;
in case that the first SRS resource or the SRS resource set where the first SRS resource is included, is not configured with spatial relation information, sending the SRS corresponding to the first SRS resource set to the network device by using an uplink filter corresponding to spatial relation information indicated for SRS resources in an SRS resource set configured with one of the multiple usage types; or,
in case that the first SRS resource or the SRS resource set where the first SRS resource is included, is not configured with a transmission configuration indicator (TCI) state, sending the SRS corresponding to the first SRS resource set to the network device by using an uplink filter corresponding to a TCI state indicated for an SRS resource or an SRS resource set configured with one of the multiple usage types.

15. The method according to claim 1, wherein the sending an SRS corresponding to the first SRS resource to the network device according to the first information, includes:
determining the first SRS resource according to the first information;
determining an uplink filter for SRS transmission corresponding to the first SRS resource, according to one or more of multiple downlink filters for reception of physical downlink shared channel (PDSCH), and sending the SRS corresponding to the first SRS resource according to the uplink filters.

16. The method according to claim 1, wherein after the sending an SRS corresponding to the first SRS resource to the network device according to the first information, the method further includes:
determining, according to the uplink filter for SRS transmission corresponding to the first SRS resource, downlink filter for reception of PDSCH sent by the network device.

17. The method according to claim 1, wherein when transmitting the SRS corresponding to the SRS resource set where the first SRS resource is included, to the network device, SRSs corresponding to any two SRS resources in the SRS resource set where the first SRS resource is included, are transmitted at different moments; and no uplink transmission is performed between any two SRS resources which are configured in a same slot and which are in the SRS resource set where the first SRS resource is included.

18. A signal transmission method, performed by a network device, comprising:
sending first information to a terminal, wherein the first information is used to indicate that a first sounding reference signal (SRS) resource is used for multiple usages;
receiving an SRS corresponding to the first SRS resource, which is sent by the terminal to the network device according to the first information.

19. The method according to claim 18, wherein the first information is further used to indicate the first SRS resource set where the first SRS resource is included and/or indicate the first SRS resource.

20. The method according to claim 18 or 19, wherein the first SRS resource includes all or part of SRS resources in an SRS resource set configured with a first usage type; the first information is further used to indicate that all or part of the SRS resources in the SRS resource set configured with the first usage type are further used for a second usage.

21. The method according to claim 20, wherein the first SRS resource includes a specific SRS resource in the SRS resource set configured with the first usage type, and the first information is used to indicate that the specific SRS resource in the SRS resource set configured with the first usage type is further used for the second usage.

22. The method according to claim 20, wherein the first SRS resource includes all or part of SRS resources in the SRS resource set configured with the first usage type and the time-domain type of the specific type; and the first information is used to indicate that all or part of the SRS resources in the SRS resource set configured with the first usage type and the time-domain type of the specific type, are further used for the second usage.

23. The method according to claim 20, wherein the first SRS resource includes a specific SRS resource in the SRS resource set configured with the first usage type and the time-domain type of the specific type, and the first information is used to indicate that the specific SRS resource in the SRS resource set configured with the first usage type and the time-domain type of the specific type, is further used for the second usage.

24. The method according to claim 21 or 23, wherein the specific SRS resource includes at least one of the following:
an SRS resource indicated by the first information;
first s SRS resources with smallest indexes in the SRS resource set configured with the first usage type, wherein s is a positive integer;
first m SRS resources with earliest transmission moment in the SRS resource set configured with the first usage type, wherein m is a positive integer;
an SRS resource in a specific SRS resource set in the SRS resource set configured with the first usage type;
an SRS resource, which is configured in the SRS resource set configured with the first usage type and which is simultaneously configured in a second SRS resource set; wherein the second SRS resource set is an SRS resource set whose usage type is configured as a second usage type,
first k SRS resources with smallest indexes in the SRS resource set configured with the first usage type and the time-domain type of the specific type, wherein k is a positive integer;
first n SRS resources with earliest transmission moment in the SRS resource set configured with the first usage type and the time-domain type of the specific type, wherein n is a positive integer;
an SRS resource in a specific SRS resource set in the SRS resource set configured with the first usage type and the time-domain type of the specific type; or,
an SRS resource, which is configured in the SRS resource set configured with the first usage type and the time-domain type of the specific type and which is simultaneously configured in the second SRS resource set.

25. The method according to claim 24, wherein the specific SRS resource set is one of the following:
an SRS resource set indicated by the first information;
first k SRS resource sets with smallest indexes in the SRS resource set configured with the first usage type, wherein k is a positive integer;
first n SRS resource sets with earliest transmission moment in the SRS resource set configured with the first usage type, wherein n is a positive integer;
first t SRS resource sets with smallest indexes in the SRS resource set configured with the first usage type and the time-domain type of the specific type, wherein t is a positive integer;
first r SRS resource sets with earliest transmission moment in the SRS resource set configured with the first usage type and the time-domain type of the specific type, wherein r is a positive integer.

26. The method according to claim 20, wherein the first usage includes at least one of the following:
downlink channel state information (CSI) acquisition;
uplink CSI acquisition;
CSI acquisition on codebook-based physical shared channel (PUSCH);
CSI acquisition on non-codebook PUSCH;
beam management; or,
position;
and/or,
the second usage includes at least one of the following:
downlink CSI acquisition;
uplink CSI acquisition;
CSI acquisition on codebook-based PUSCH;
CSI acquisition on non-codebook PUSCH;
beam management; or,
position.

27. The method according to claim 20, wherein the first SRS resource includes: an SRS resource which is simultaneously included in both the SRS resource set configured with the first usage type and the SRS resource set configured with the second usage type.

28. The method according to claim 27, wherein the first SRS resource includes: an SRS resource which is simultaneously included in both the first SRS resource set configured with the first usage type and the time-domain type of the specific type, and the second SRS resource set configured with the second usage type.

29. The method according to claim 20, wherein the first information is carried in a first signaling or the first information is carried in an SRS resource set configuration signaling sent by the network device to the terminal;
the first signaling includes at least one of the following:
radio resource control (RRC) signaling;
medium access control-control element (MAC-CE) signaling;
downlink control information (DCI) signaling; or,
SRS trigger signaling.

30. The method according to claim 20, wherein the first information is carried in an SRS resource set configuration signaling sent by the network device to the terminal;
in case that the SRS resource set configuration signaling does not configure an SRS resource set whose usage type is the second usage type, it indicates that the SRS resource set configured with the first usage type is further used for the second usage; or,
in case that the SRS resource set configuration signaling configures an SRS resource set whose usage type is the second usage type, and there presents an SRS resource which is simultaneously included in both the SRS resource set configured with the first usage type and the SRS resource set configured with the second usage type, it indicates that the SRS resource set configured with the first usage type is further used for the second usage, or that the SRS resource which is simultaneously included in both the SRS resource set configured with the first usage type and the SRS resource set configured with the second usage type, is further used for the second usage.

31. The method according to claim 18, wherein the receiving an SRS corresponding to the first SRS resource, which is sent by the terminal to the network device according to the first information, includes:
determining an uplink reception filter for SRS transmission corresponding to the first SRS resource, according to one or more of multiple downlink transmission filter for transmission of physical downlink shared channel (PDSCH), and receiving the SRS corresponding to the first SRS resource according to the uplink reception filter.

32. A terminal, comprising: a memory, a transceiver and a processor;
wherein the memory is configured to store a computer program; the transceiver is configured to send and receive data under control of the processor; the processor is configured to read the computer program in the memory and perform the following operations:
receiving first information sent by a network device, wherein the first information is used to indicate that a first sounding reference signal (SRS) resource is used for multiple usages; and
sending an SRS corresponding to the first SRS resource to the network device according to the first information.

33. The terminal according to claim 32, wherein the first SRS resource includes all or part of SRS resources in an SRS resource set configured with a first usage type; the first information is further used to indicate that all or part of the SRS resources in the SRS resource set configured with the first usage type are further used for a second usage.

34. The terminal according to claim 33, wherein the first SRS resource includes a specific SRS resource in the SRS resource set configured with the first usage type, and the first information is used to indicate that the specific SRS resource in the SRS resource set configured with the first usage type is further used for the second usage.

35. A network device, comprising: a memory, a transceiver and a processor;
wherein the memory is configured to store a computer program; the transceiver is configured to send and receive data under control of the processor; the processor is configured to read the computer program in the memory and perform the following operations:
sending first information to a terminal, wherein the first information is used to indicate that a first sounding reference signal (SRS) resource is used for multiple usages;
receiving an SRS corresponding to the first SRS resource, which is sent by the terminal to the network device according to the first information.

36. The terminal according to claim 35, wherein the first SRS resource includes all or part of SRS resources in an SRS resource set configured with a first usage type; the first information is further used to indicate that all or part of the SRS resources in the SRS resource set configured with the first usage type are further used for a second usage.

37. The terminal according to claim 36, wherein the first SRS resource includes a specific SRS resource in the SRS resource set configured with the first usage type, and the first information is used to indicate that the specific SRS resource in the SRS resource set configured with the first usage type is further used for the second usage.

38. A terminal, comprising:
a first receiving module configured to receive first information sent by a network device, wherein the first information is used to indicate that a first SRS resource is used for multiple usages;
a first sending module configured to send an SRS corresponding to the first SRS resource to the network device according to the first information.

39. A network device, comprising: a second sending unit configured to send first information to a terminal, wherein the first information is used to indicate that a first SRS resource is used for multiple usages, and to receive an SRS corresponding to the first SRS resource, which is sent to the network device according to the first information.

40. A processor-readable storage medium, comprising a computer program stored thereon; wherein the computer program is configured to cause a processor to execute the signal transmission method according to any one of claims 1 to 17, or, the computer program is configured to cause the processor to execute the signal transmission method according to any one of claims 18 to 31.
